# EUROPÄISCHE PATENTSCHRIFT

(11) **EP 4 199 149 B1**
(45) Veröffentlichungstag und Bekanntmachung des Hinweises auf die Patenterteilung: **17.07.2024**
(21) Anmeldenummer: 21215533.7
(22) Anmeldetag: 17.12.2021
(51) Int. Cl.: H01M 4/38, H01M 10/054, H01M 10/0563, H01M 10/0568, H01M 4/48, H01M 4/485, H01M 4/525, H01M 4/58, H01M 4/587, H01M 4/66

(54) **WIEDERAUFLADBARE BATTERIEZELLE**
RECHARGEABLE BATTERY CELL
CELLULE DE BATTERIE RECHARGEABLE

(43) Veröffentlichungstag der Anmeldung: 21.06.2023
(73) Patentinhaber: Innolith Technology AG, 4052 Basel (CH)
(72) Erfinder: ZINCK, Laurent, 67470 Mothern (FR); PSZOLLA, Christian, 76669 Bad Schönborn (DE); BUSCH, Rebecca, 4462 Maisprach (CH)
(74) Vertreter: LBP Lemcke, Brommer & Partner Patentanwälte mbB

(56) Entgegenhaltungen:
- EP-A1- 2 860 799
- EP-A1- 3 794 666
- EP-B1- 3 794 666
- US-A- 4 891 281
- US-A1- 2021 057 795

## Beschreibung

Die Erfindung betrifft eine wiederaufladbare Batteriezelle umfassend Natrium als aktives Metall.

Wiederaufladbare Batteriezellen sind auf vielen technischen Gebieten von großer Bedeutung. Vielfach werden sie für Anwendungen eingesetzt, bei denen nur kleine wiederaufladbare Batteriezellen mit relativ geringen Stromstärken benötigt werden, wie beispielsweise beim Betrieb von Mobiltelefonen. Daneben gibt es aber auch einen großen Bedarf an größeren wiederaufladbaren Batteriezellen für Hochenergieanwendungen, wobei eine Massenspeicherung von Energie in Form von Batteriezellen für den elektrischen Antrieb von Fahrzeugen von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Ein Nachteil von Lithiumzellen liegt jedoch in den begrenzten Ressourcen von Lithium auf der Erde. Deshalb versuchen viele Forschungsgruppen auf diesem Gebiet einen Ersatz für Lithium als aktives Metall zu finden, der von einer Seite die großen Vorteile des Lithiums aufweist aber gleichzeitig leicht zugänglich und kostengünstig ist. Als ein möglicher Ersatz von Lithium wird Natrium untersucht.

Als aktives Metall einer wiederaufladbaren Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen. Diese elektrochemischen Prozesse führen direkt oder indirekt zur Abgabe von Elektronen in den externen Stromkreis oder zur Aufnahme von Elektronen aus dem externen Stromkreis. Aktive Metalle können, wie oben erwähnt, Lithium oder Natrium sein. Wiederaufladbare Batteriezellen, welche Lithium bzw. Natrium als aktives Metall enthalten, werden auch als Lithium-Ionen-Zellen bzw. Natrium-Ionen-Zellen bezeichnet. Lithium-Ionen-Zellen sind schon lange bekannt und sind ausführlich in dem Stand der Technik beschrieben. Im Gegenteil dazu sind die Natrium-Ionen-Zellen erst seit 2010 im Fokus der Forschung und werden hier nachfolgend detaillierter beschrieben. Die meisten Forschungsaktivitäten waren der Entdeckung von Hochleistungsanoden gewidmet, um die Energiedichte von Natrium-Ionen-Batterien zu erhöhen, da Graphit, das hauptsächlich verwendete Material in Lithium-lonen-Zellen, im Vergleich mit Lithium eine viel geringere Speicherkapazität für Natrium aufweist.

Wie jede wiederaufladbare Batteriezelle weist die Natrium-Ionen-Zelle ein Gehäuse auf, in dem zumindest eine positive Elektrode mit einem Ableitelement, zumindest eine negative Elektrode mit einem Ableitelement und ein Elektrolyt angeordnet sind. Sowohl die positive als auch die negative Elektrode der aus dem Stand der Technik bekannten Natrium-Ionen-Zellen sind als Insertionselektroden ausgebildet. Unter dem Begriff "Insertionselektrode" im Sinne der vorliegenden Erfindung werden Elektroden verstanden, welche eine Kristallstruktur aufweisen, in die Ionen des aktiven Metalls beim Betrieb der Natrium-Ionen-Zelle ein- und ausgelagert werden können. Das bedeutet, dass sich die Elektrodenprozesse nicht nur an der Oberfläche der Elektroden, sondern auch innerhalb der Kristallstruktur abspielen können.

Auch der Elektrolyt ist ein wichtiges Funktionselement jeder wiederaufladbaren Batteriezelle. Er enthält meistens ein Lösungsmittel oder Lösungsmittelgemisch und mindestens ein Leitsalz. Feststoffelektrolyte oder ionische Flüssigkeiten enthalten zum Beispiel kein Lösungsmittel, sondern nur ein Leitsalz. Der Elektrolyt steht mit der positiven und der negativen Elektrode der Batteriezelle in Kontakt. Mindestens ein Ion des Leitsalzes (Anion oder Kation) ist in dem Elektrolyten derartig beweglich, dass durch lonenleitung ein für die Funktion der wiederaufladbaren Batteriezelle erforderlicher Ladungstransport zwischen den Elektroden stattfinden kann. Der Elektrolyt wird ab einer bestimmten oberen Zellspannung der wiederaufladbaren Batteriezelle oxidativ elektrochemisch zersetzt. Dieser Vorgang führt oft zu einer irreversiblen Zerstörung von Bestandteilen des Elektrolyten und damit zu einem Ausfall der wiederaufladbaren Batteriezelle. Auch reduktive Prozesse können den Elektrolyten ab einer bestimmten unteren Zellspannung zersetzen. Um diese Prozesse zu vermeiden, werden die positive und die negative Elektrode derart gewählt, dass die Zellspannung unter- bzw. oberhalb der Zersetzungsspannung des Elektrolyten liegt. Der Elektrolyt bestimmt somit das Spannungsfenster (in Engl.: voltage window), in dessen Bereich eine wiederaufladbare Batteriezelle reversibel betrieben, das heißt (d.h.) wiederholt aufgeladen und entladen werden kann.

Die aus dem Stand der Technik bekannten organischen Natrium-Ionen-Zellen enthalten einen Elektrolyten, der aus einem organischen Lösungsmittel oder Lösungsmittelgemisch und einem darin gelösten Leitsalz besteht. Bei dem Leitsalz handelt es sich um ein Natriumsalz wie beispielsweise Natriumperchlorat (NaClO₄) oder Natriumhexafluorophosphat (NaPF₆). Das organische Lösungsmittelgemisch kann beispielsweise Propylencarbonat (PC) sein. Lösungsmittelgemische können Ethylencarbonat (EC), Diethylcarbonat (DEC) oder Dimethylcarbonat (DMC) enthalten. Es werden zum Beispiel folgende Gemische verwendet: EC:DEC, EC:PC oder EC:DMC.

Aufgrund der Verwendung des organischen Lösungsmittels oder Lösungsmittelgemischs werden derartige Natrium-Ionen-Zellen auch als organische Natrium-Ionen-Zellen bezeichnet.

Eine geeignete negative Elektrode für organische Natrium-Ionen-Zellen besteht zum Beispiel aus Kohlenstoff in der Modifikation Hartkohlenstoff (engl. hard carbon). Hartkohlenstoff hat eine Kapazität vom 300 mAh/g und eine Zykeleffizienz im ersten Zyklus von 80%. Positive Elektrode der organischen Natrium-Ionen-Zelle können aus Schichtoxiden wie z.B. NaMeOₓ oder polyanionschen Verbindungen wie z.B. Phosphaten (NaMePO₄), Pyrophosphaten (Na₂MeP₂O₇) und Fluorophosphaten (Na₂Me(PO)₄F) bestehen, wobei "Me" jeweils für ein Übergangsmetall steht.

Natrium ist ein sehr elektronegatives Metall (-2,71 V vs. Standard Wasserstoffelektrode, SHE), wodurch eine sehr hohe Zellspannung gegen eine positive Elektrode erzeugt wird. An der negativen Elektrode findet die Reduktion des organischen Elektrolyten statt. Diese reduktive Zersetzung ist irreversibel. Keine organischen Lösungsmittel sind thermodynamisch stabil gegenüber Natrium oder gegenüber Natrium, welches in Kohlenstoff gespeichert ist. Viele Lösungsmittel bilden jedoch einen Passivierungsfilm auf der Elektrodenoberfläche der negativen Elektrode. Dieser Film trennt das Lösungsmittel räumlich von der Elektrode, ist aber ionisch leitfähig und ermöglicht so den Durchgang von Natriumionen. Der Passivierungsfilm, die so genannte "**S**olid **E**lectrolyte **I**nterphase" (SEI), verleiht dem System Stabilität, wodurch die Herstellung von organischen Natrium-Ionen-Zellen ermöglicht wird. Bei der Bildung der SEI wird Natrium in den Passivierungsfilm integriert. Dieser Prozess ist irreversibel, wodurch ein Kapazitätsverlust beobachtet wird. Dieser irreversible Kapazitätsverlust, der auch als Deckschichtkapazität bezeichnet wird, hängt von der verwendeten Elektrolytformulierung und den verwendeten Elektroden ab. In organischen Natrium-Ionen-Zellen dauert die Elektrolytzersetzung und Bildung von Natriumionen-enthaltenen Schichten während des weiteren Betriebs der organischen Natrium-Ionen-Zelle oft an und ist für den Kapazitätsverlust und damit für eine kürzere Lebenszeit der organischen Natrium-Ionen-Zelle verantwortlich. Deshalb sind organische Natrium-Ionen-Zellen problematisch hinsichtlich ihrer Stabilität sowie langfristigen Betriebssicherheit. Sicherheitsrisiken werden insbesondere auch durch die Brennbarkeit des organischen Lösungsmittels oder Lösungsmittelgemischs verursacht. Wenn eine organische Natrium-Ionen-Zelle Feuer fängt oder sogar explodiert, bildet das organische Lösungsmittel des Elektrolyten ein brennbares Material. Ein weiterer Nachteil von organischen Natrium-Ionen-Zellen besteht in der Zersetzung der organischen Bestandteile der SEI-Schicht und der damit verbundenen Freisetzung giftiger Gase. Zusätzlich findet dadurch eine weitere Erwärmung der Zelle statt. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Natrium-Ionen-Zelle. Die zusätzlichen Maßnahmen werden jedoch bei einer möglichen Vermarktung als nachteilig bewertet.

Eine aus dem Stand der Technik bekannte Weiterentwicklung sieht die Verwendung eines Elektrolyten auf Schwefeldioxid (SO₂)-Basis anstatt eines organischen Elektrolyten für wiederaufladbare Batteriezellen vor. Wiederaufladbare Batteriezellen, welche einen auf SO₂-basierenden Elektrolyten enthalten, weisen unter anderem eine hohe ionische Leitfähigkeit auf. Unter dem Begriff "auf SO₂-basierender Elektrolyt" ist ein Elektrolyt zu verstehen, der SO₂ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch SO₂ gewährleistet ist. Das SO₂ dient also als Lösungsmittel für das Leitsalz. Das Leitsalz kann mit dem gasförmigen SO₂ einen flüssigen Solvatkomplex bilden, wobei das SO₂ gebunden und der Dampfdruck gegenüber dem reinen SO₂ merklich gesenkt wird. Es entstehen Elektrolyte mit niederem Dampfdruck. Derartige Elektrolyten auf SO₂-Basis haben im Vergleich zu den zuvor beschriebenen organischen Elektrolyten den Vorteil der Nichtbrennbarkeit. Sicherheitsrisiken, welche durch die Brennbarkeit des Elektrolyten bestehen, können dadurch ausgeschlossen werden.

Hauptsächlich werden auf SO₂-basierende Elektrolyte der Zusammensetzung LiAlCl₄ * xSO₂ verwendet. Aber auch Natrium-Leitsalze wurden untersucht. Die US 4,891,281 (bezeichnet als [V1]) zeigt Untersuchungen unter anderem mit Lithium- und Natriumleitsalzen, z.B. LiAlCl₄ und NaAlCl₄, in auf SO₂-basierenden Elektrolyten. Dem Dokument entnimmt man jedoch, dass Elektrolyte mit dem Leitsalz NaAlCl₄ eine schlechtere Leitfähigkeit zeigen als Elektrolyte mit dem Leitsalz LiAlCl₄.Die EP 2 860 799 A1 (bezeichnet als [V2]) offenbart eine wiederaufladbare Alkali-Ionen-Batterie mit einem auf SO₂-basierenden Elektrolyten mit der Zusammensetzung NaAlCl₄ * xSO₂. Ein Beispiel zeigt diesen Elektrolyten in Kombination mit einer Natrium-Metall-Anode und einer kohlenstoffhaltigen Kathode, an der SO₂ als aktives Elektrodenmaterial beim Betrieb der Batteriezelle oxidiert bzw. reduziert wird.

Aus der EP 2 860 811 A1 (bezeichnet als [V3]) geht eine Batteriezelle mit einem Elektrolyten der Zusammensetzung NaAlCl₄ * xSO₂, einer metall-chlorid-haltigen Kathode und einer Anode, die ein natriumenthaltendes anorganisches Material enthält, hervor.

Neben den in SO₂-Elektrolyten gebräuchlichen Alkali-Tetrachloroaluminat-Leitsalzen (z.B. LiAlCl₄ * xSO₂ oder NaAlCl₄ * xSO₂) offenbart die EP 3 772 129 A1 (bezeichnet als [V4]) eine neue Gruppe von Leitsalzen für auf SO₂-basierende Elektrolyten. Diese Leitsalze bestehen aus einem Anion mit vier substituierten Hydoxygruppen gruppiert um das Zentralatom Bor oder Aluminium und einem Kation, bestehend aus dem aktiven Metall der Zelle. Alle Beispiele zeigen Experimente ausschließlich mit Lithiumsalzen dieser Art.

EP 3 794 666 A1 (bezeichnet als [V7]) offenbart ebenfalls eine wiederaufladbare Batteriezelle umfassend einen auf SO₂-basierenden Elektrolyten und ein Aluminat- oder Boratsalz als erstes Leitsalz. Als aktives Metall wird ausschließlich Lithium verwendet.

Aus US 2021/057795 A1 (bezeichnet als [V8]) ist eine Lithium-Luft-Batterie bekannt, die einen Elektrolyten aufweist, der ein Lithiumsalz, ein Natriumsalz in Form von Natrium-Alkylfluoroborat und ein Lösungsmittel umfasst. Der Elektrolyt ist jedoch kein auf SO₂-basierender Elektrolyt.

Ein Problem bei den auf SO₂-basierenden Elektrolyten besteht darin, dass viele, insbesondere auch für organische Natrium-Ionen-Zellen bekannte Leitsalze nicht in SO₂ löslich sind und somit solche Leitsalze für den Einsatz bei wiederaufladbaren Natrium-Ionen-Zellen mit einem auf SO₂-basierenden Elektrolyten ungeeignet sind.

Somit liegt die der vorliegenden Erfindung zugrunde liegende Aufgabe eine wiederaufladbare Batteriezelle bereitzustellen, die gegenüber den aus dem Stand der Technik bekannten wiederaufladbaren Batteriezellen:
- keine Verwendung von Lithium vorsieht,
- einen auf SO₂-basierenden Elektrolyten enthält, der eine für Leitsalze gute Löslichkeit aufweist und damit ein guter lonenleiter und elektronischer Isolator ist, damit der ionentransport erleichtert und die Selbstentladung auf ein Minimum beschränkt werden kann;
- einen auf SO₂-basierenden Elektrolyten enthält, der auch gegenüber anderen Komponenten der wiederaufladbaren Batteriezelle, wie Separatoren, Elektrodenmaterialien und Zellverpackungsmaterialien, inert ist;
- ein breites elektrochemisches Fenster hat, sodass keine oxidative Elektrolytzersetzung an der positiven Elektrode auftritt;
- eine stabile Deckschicht auf der negativen Elektrode aufweist, wobei die Deckschichtkapazität niedrig sein sollte und im weiteren Betrieb keine weitere reduktive Elektrolytzersetzung an der negativen Elektrode auftritt;
- gegen verschiedene Missbräuche, wie elektrische, mechanische oder thermische, robust ist;
- einen auf SO₂-basierenden Elektrolyten enthält, der aus wirtschaftlicher Sicht günstige und leicht zu beschaffendende Rohstoffe enthält.
- das Ableitelement der negativen Elektrode auch ein Ableiter aus Aluminium sein kann.

Derartige wiederaufladbare Batteriezellen sollen insbesondere auch sehr gute elektrische Energie- und Leistungsdaten, eine hohe Betriebssicherheit und Lebensdauer, insbesondere eine hohe Zahl nutzbarer Lade- und Entladezyklen aufweisen, ohne dass sich hierbei der Elektrolyt im Betrieb der wiederaufladbaren Batteriezelle zersetzt.

Die der vorliegenden Erfindung zugrunde liegende Aufgabe wurde überraschenderweise durch eine wiederaufladbare Batteriezelle mit den Merkmalen des Anspruchs 1 gelöst. Die Ansprüche 2 bis 20 beschreiben vorteilhafte Weiterbildungen der erfindungsgemäßen wiederaufladbaren Batteriezelle. Weitere vorteilhafte Weiterbildungen der erfindungsgemäßen wiederaufladbaren Batteriezelle sind der Beschreibung, den Beispielen und den Zeichnungen zu entnehmen.

Eine erfindungsgemäße wiederaufladbare Batteriezelle enthält ein aktives Metall, zumindest eine positive Elektrode, zumindest eine negative Elektrode, ein Gehäuse und einen Elektrolyten, wobei das aktive Metall Natrium ist. Der Elektrolyt basiert auf SO₂ und enthält zumindest ein erstes Leitsalz, welches die Formel (I) 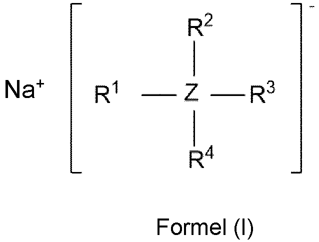 aufweist. In Formel (I) sind die Substituenten R¹, R² und R³ unabhängig voneinander ausgewählt aus der Gruppe bestehend aus einem Halogenatom, einer Hydroxygruppe und einer chemischen Gruppe -OR⁵. Der Substituent R⁴ ist ausgewählt aus der Gruppe bestehend aus einer Hydroxygruppe und einer chemischen Gruppe -OR⁵, wobei der Substituent R⁵ ausgewählt ist aus der Gruppe bestehend aus C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl, wobei die aliphatischen, cyclischen, aromatischen und heteroaromatischen Gruppen unsubstituiert oder substituiert sein können. Mindestens zwei der Substituenten R¹, R², R³ und R⁴ können gemeinsam einen Chelatliganden bilden, der an Z koordiniert ist. Ferner ist entweder Aluminium oder Bor. Ferner können die aliphatischen, cyclischen, aromatischen und heteroaromatischen Gruppen des Substituenten R⁵ weiter substituiert werden mit
- einem oder mehreren Halogenatomen, insbesondere Fluor, oder
- einer chemischen Gruppe, die ausgewählt ist aus der Gruppe bestehend aus C₁-C₄-Alkyl, C₂-C₄-Alkenyl, C₂-C₄-Alkinyl, Phenyl, Benzyl, und vollständig oder teilweise halogeniertem, insbesondere vollständig oder teilweise fluoriertem C₁-C₄-Alkyl, C₂-C₄-Alkenyl, C₂-C₄-Alkinyl, Phenyl und Benzyl.

Unter der Formulierung "Chelatligand, der mindestens von zwei der Substituenten R¹, R², R³ und R⁴ gemeinsam gebildet wird und an Z koordiniert ist" ist im Sinne der vorliegenden Erfindung zu verstehen, dass zumindest zwei der Substituenten R¹, R², R³ und R⁴ untereinander verbrückt sein können, wobei diese Verbrückung von zwei Substituenten zu der Bildung eines zweizähnigen Chelatliganden führt. Beispielsweise kann der Chelatligand zweizähnig gemäß der Formel -O-R⁵-O- ausgebildet sein. Zur Ausbildung dieses Chelatliganden -O-R⁵-O- kann aus struktureller Hinsicht der erste Substituent R¹ bevorzugt eine OR⁵-Gruppe und der zweite Substituent R² bevorzugt eine Hydroxygruppe sein, welche in ihrem verbrückten Zustand miteinander durch Ausbildung einer chemischen Bindung verbunden sind und daher die zuvor genannte Formel -O-R⁵-O- aufweisen. Solche Chelatliganden können beispielsweise die folgenden Strukturformeln aufweisen:

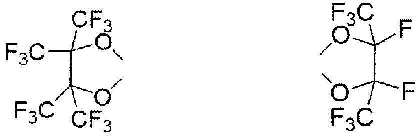

Der Chelatligand koordiniert an das Zentralatom Z unter Bildung eines Chelatkomplexes. Im Fall des zweizähnigen Chelatliganden -O-R⁵-O- koordinieren die beiden Sauerstoffatome an das Zentralatom Z. Synthetisch können solche Chelatkomplexe wie in dem nachfolgend beschriebenen Beispiel 1 hergestellt werden. Die Bezeichnung "Chelatkomplex" steht für Komplexverbindungen, bei denen ein mehrzähniger Ligand (besitzt mehr als ein freies Elektronenpaar) mindestens zwei Koordinationsstellen (Bindungsstellen) des Zentralatoms einnimmt. Der Chelatligand kann auch mehrzähnig ausgebildet sein, wenn drei oder vier der Substituenten R¹, R², R³ und R⁴ jeweils untereinander verbrückt vorliegen. Der in der erfindungsgemäßen wiederaufladbaren Batteriezelle verwendete auf SO₂-basierende Elektrolyt enthält SO₂ nicht nur als Zusatz in geringer Konzentration, sondern in Konzentrationen, bei denen die Beweglichkeit der Ionen des ersten Leitsalzes, das in dem Elektrolyten enthalten ist und den Ladungstransport bewirkt, zumindest teilweise, größtenteils oder sogar vollständig durch das SO₂ gewährleistet ist. Das erste Leitsalz ist in dem Elektrolyten gelöst und zeigt darin eine sehr gute Löslichkeit. Es kann mit dem gasförmigen SO₂ einen flüssigen Solvatkomplex bilden, in welchem das SO₂ gebunden wird. In diesem Fall sinkt der Dampfdruck des flüssigen Solvatkomplexes gegenüber dem reinen SO₂ deutlich und es entstehen Elektrolyte mit niederem Dampfdruck. Es liegt jedoch auch im Rahmen der Erfindung, dass es bei der Herstellung des erfindungsgemäßen Elektrolyten, je nachdem welche chemische Struktur das erste Leitsalz nach Formel (I) hat, zu keiner Dampfdruckerniedrigung kommen kann. Im letztgenannten Fall ist es bevorzugt, dass bei der Herstellung des erfindungsgemäßen Elektrolyten bei Tieftemperatur oder unter Druck gearbeitet wird. Der Elektrolyt kann auch mehrere Leitsalze der Formel (I) enthalten, welche in ihrer chemischen Struktur voneinander abweichen. Der Begriff "C₁-C₁₀ Alkyl" umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, iso-Octyl, n-Nonyl, n-Decyl und dergleichen.

Der Begriff "C₂-C₁₀ Alkenyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Doppelbindung aufweisen. Hierunter fallen insbesondere Ethenyl, 1-Propenyl, 2- Propenyl, 1-n-Butenyl, 2-n-Butenyl, iso-Butenyl, 1-Pentenyl, 1-Hexenyl, 1-Heptenyl, 1-Octenyl, 1-Nonenyl, 1- Decenyl und dergleichen.

Der Begriff "C₂-C₁₀ Alkinyl" umfasst im Sinne der vorliegenden Erfindung ungesättigte lineare oder verzweigte Kohlenwasserstoffgruppen mit zwei bis zehn Kohlenstoffatomen, wobei die Kohlenwasserstoffgruppen zumindest eine C-C-Dreifachbindung aufweisen. Hierunter fallen insbesondere Ethinyl, 1-Propinyl, 2- Propinyl, 1-n-Butinyl, 2-n-Butinyl, iso-Butinyl, 1-Pentinyl, 1- Hexinyl, 1-Heptinyl, 1-Octinyl, 1-Noninyl, 1- Decinyl und dergleichen.

Der Begriff "C₃-C₁₀ Cycloalkyl" umfasst im Sinne der vorliegenden Erfindung zyklische, gesättigte Kohlenwasserstoffgruppen mit drei bis zehn Kohlenstoffatomen. Hierunter fallen insbesondere Cyclopropyl, Cyclobutyl, Cyclopentyl, Cyclohexyl, Cycloheptyl, Cyclohexyl, Cyclononyl und Cyclodecanyl.

Der Begriff "C₆-C₁₄ Aryl" umfasst im Sinne der vorliegenden Erfindung aromatische Kohlenwasserstoffgruppen mit sechs bis vierzehn ringständigen Kohlenstoffatomen. Hierunter fallen insbesondere Phenyl (C₆H₅ Gruppe), Naphthyl (C₁₀H₇ Gruppe) und Anthracyl (C₁₄H₉ Gruppe).

Der Begriff "C₅₋C₁₄ Heteroaryl" umfasst im Sinne der vorliegenden Erfindung aromatische Kohlenwasserstoffgruppen mit fünf bis vierzehn ringständigen Kohlenwasserstoffatomen, bei welchen zumindest ein Kohlenwasserstoff-Atom durch ein Stickstoff-, Sauerstoff- oder Schwefel-Atom ersetzt bzw. ausgetauscht ist. Hierunter fallen insbesondere Pyrrolyl, Furanyl, Thiophenyl, Pyrridinyl, Pyranyl, Thiopyranyl und dergleichen. Alle der vorgenannten Kohlenwasserstoffgruppen sind jeweils über das Sauerstoff-Atom an Zentralatom gemäß Formel (I) gebunden.

Bei allen bereits erwähnten Definitionen der Begriffe ist es ebenfalls im Sinne der vorliegenden Erfindung, dass die aliphatischen, cyclischen, aromatischen und heteroaromatischen Resten/Gruppen unsubstituiert oder substituiert sein können. Bei der Substitution wird ein Wasserstoffatom oder mehrere Wasserstoffatome der aliphatischen, cyclischen, aromatischen und heteroaromatischen Resten/Gruppen durch jeweils ein Atom, wie beispielsweise Fluor oder Chlor, oder eine chemische Gruppe, wie beispielsweise CF₃, ersetzt.

Die erfindungsgemäße wiederaufladbare Batteriezelle benutzt als aktives Metall das kostengünstige und gut erhältliche Natrium und weist somit den ersten großen Vorteil gegenüber den aus dem Stand der Technik bekannten Lithium-Ionen-Zellen auf.

Ferner hat die erfindungsgemäße wiederaufladbare Batteriezelle mit einem derartigen Elektrolytenden Vorteil gegenüber wiederaufladbaren Batteriezellen mit aus dem Stand der Technik bekannten SO₂-basierenden Elektrolyten mit Natriumleitsalzen, dass das darin enthaltene erste Leitsalz der Formel (I) eine höhere Oxidationsstabilität aufweist und infolgedessen im Wesentlichen keine Zersetzung bei höheren Zellspannungen zeigt. Dieser Elektrolyt ist oxidationsstabil bevorzugt mindestens bis zu einem oberen Potential von 3,6 Volt, weiter bevorzugt mindestens bis zu einem oberen Potential von 3,8 Volt, weiter bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt und besonders bevorzugt mindestens bis zu einem oberen Potential von 4,6 Volt. Somit kommt es bei der Verwendung der erfindungsgemä-ßen wiederaufladbaren Zelle umfassend einen solchen Elektrolyten zu einer nur geringen oder sogar gar keinen Elektrolytzersetzung innerhalb der Arbeitspotentiale, also im Bereich zwischen der Ladeschlussspannung und der Entladeschlussspannung, beider Elektroden der wiederaufladbaren Batteriezelle.

Die Lebensdauer der erfindungsgemäßen wiederaufladbaren Batteriezelle, die diesen Elektrolyten enthält, ist gegenüber wiederaufladbaren Batteriezellen, die aus dem Stand der Technik bekannten Elektrolyten enthalten, deutlich verlängert.

Weiterhin ist die erfindungsgemäße wiederaufladbare Batteriezelle mit einem solchem Elektrolyten auch tieftemperaturfest. Die Leitfähigkeit des Elektrolyten bei tiefen Temperaturen ist ausreichend zum Betrieb einer Batteriezelle.

Diese Vorteile der erfindungsgemäßen wiederaufladbaren Batteriezelle umfassend den Elektrolyten überwiegen den Nachteil, der dadurch entsteht, dass das erste Leitsalz der Formel (I) eine im Vergleich zu den aus dem Stand der Technik bekannten Natrium-Leitsalzen deutlich höhere Anionengröße aufweist. Diese höhere Anionengröße führt zu einer im Vergleich zur Leitfähigkeit von NaAlCl₄ geringeren Leitfähigkeit des ersten Leitsalzes gemäß Formel (I).

### Negative Elektrode

Nachfolgend sind vorteilhafte Weiterbildungen der erfindungsgemäßen wiederaufladbaren Batteriezelle im Hinblick auf die negative Elektrode beschrieben:
Eine vorteilhafte Weiterbildung der erfindungsgemäßen wiederaufladbaren Batteriezelle sieht vor, dass das aktive Material der negativen Elektrode aus metallischem Natrium und / oder mindestens einem natriumspeichernden Material besteht, das ausgewählt ist aus der Gruppe bestehend aus Insertionsmaterialien, Adsorptionsmaterialien, legierungsbildenden Materialien und Konversionsmaterialien.

Das aktive Material der negativen Elektrode ist gemäß einer vorteilhaften Weiterbildung der erfindungsgemäßen wiederaufladbaren Batteriezelle metallisches Natrium. Das bedeutet, dass Natrium auch das aktive Metall der wiederaufladbaren Batterie ist. Dieses wird beim Laden der wiederaufladbaren Batteriezelle auf dem Ableitelement der negativen Elektrode abgeschieden. Das bedeutet, dass die negative Elektrode neben dem metallischen Natrium als aktives Material auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Beim Entladen der wiederaufladbaren Batteriezelle wird das metallische Natrium in Natriumionen umgewandelt, die von der negativen Elektrode zur positiven Elektrode wandern.

Eine weitere vorteilhafte Weiterbildung der erfindungsgemäßen wiederaufladbaren Batteriezelle mit metallischem Natrium als aktives Material der negativen Elektrode sieht vor, dass das elektronisch leitende Ableitelement der negativen Elektrode schon vor dem ersten Laden der wiederaufladbaren Batteriezelle metallisches Natrium umfasst, welches vor dem Zusammenbau der Batteriezelle auf das Ableitelement aufgebracht und zusammen mit diesem in die Batteriezelle eingebaut wurde oder welches vor dem Betrieb der Batteriezelle, d.h. vor dem ersten Laden und Entladen durch einen vorangehenden Initialisierungsladevorgang auf dem Ableitelement der negativen Elektrode abgeschieden wurde. Eine weitere vorteilhafte Weiterbildung der erfindungsgemäßen Batteriezelle mit metallischem Natrium als aktives Material der negativen Elektrode sieht vor, dass das Ableitelement der negativen Elektrode zumindest teilweise aus einem natriumspeichernden Material ausgebildet ist. Bei einer solchen Weiterbildung wird beim Laden der Batteriezelle zunächst ein Teil des aus der Elektrodenreaktion resultierenden Natriums in dem elektronisch leitenden Ableitelement aus dem natriumspeichernden Material gespeichert. Beim weiteren Laden der Batteriezelle scheidet sich dann metallisches Natrium auf das elektronisch leitende Ableitelement ab. Beim Entladen wird das metallische Natrium vollständig oder nur zum Teil aufgelöst und gelangt in Form von Ionen in die Wirtsmatrix des aktiven Materials der positiven Elektrode.

Das aktive Material der negativen Elektrode besteht gemäß einer weiteren vorteilhaften Weiterbildung der erfindungsgemäßen wiederaufladbaren Batteriezelle mindestens aus einem natriumspeichernden Material, das ausgewählt ist aus der Gruppe bestehend aus Insertionsmaterialien, Adsorptionsmaterialien, legierungsbildenden Materialien und Konversions-Materialien.

Unter dem Begriff "Insertionsmaterialien" werden im Sinne der vorliegenden Erfindung Materialien verstanden, in welchen die Ionen des aktiven Metalls während des Ladens der wiederaufladbare Batteriezelle eingelagert und aus welchem die Ionen des aktiven Metalls während des Entladens der wiederaufladbaren Batteriezelle ausgelagert werden können. Das bedeutet, dass sich die Elektrodenprozesse nicht nur an der Oberfläche der negativen Elektrode, sondern auch im Inneren der negativen Elektrode abspielen können. Unter dem Begriff "Adsorptionsmaterialien" werden im Sinne der vorliegenden Erfindung Materialien verstanden, die im Gegensatz zu Insertionsmaterialien, die eine Struktur aufweisen, in die Ionen des aktiven Metalls beim Betrieb der Natrium-Ionen-Zelle ein- und ausgelagert werden können, lagern sich bei den Adsorptionsmaterialien die Ionen an der Oberfläche an. Bei vielen Materialien finden auch Insertion und Adsorption gleichzeitig statt.

Unter dem Begriff "legierungsbildenden Materialien" werden im Sinne der vorliegenden Erfindung Materialien verstanden, bei denen es sich im Allgemeinen um Metalle und Metalllegierungen sowie deren Oxide, die mit dem aktiven Metall, wie z.B. Natrium, eine Legierung bilden, wobei diese Legierungsbildung in oder an der negativen Elektrode stattfindet und im Wesentlichen reversibel ist. Im Gegensatz zu Insertionsmaterialien wird das aktive Metall in den Legierungen nicht in eine bereits existente Struktur eingelagert. Die Einlagerung des aktiven Metalls erfolgt vielmehr über Phasenumwandlungsprozesse, die beispielsweise bei Verwendung von Natrium als aktives Metall zu einem natriumhaltigen, binären Endprodukt führen können. Bei der Legierungsbildung kann es zu einer Ausdehnung des aktiven Materials kommen.

Unter dem Begriff "Konversionsmaterialien" werden im Sinne der vorliegenden Erfindung Materialien verstanden, welche während der Elektrodenprozesse eine chemische Konversion bzw. Umwandlung durchlaufen, die zu der reversiblen Bildung einer chemischen Verbindung zwischen dem aktiven Metall und dem aktiven Material führt.

Eine weitere vorteilhafte Weiterbildung der erfindungsgemäßen wiederaufladbaren Batteriezelle sieht vor, dass das natriumspeichernde Material vorzugsweise das Insertionsmaterial enthaltend Kohlenstoff sein kann. Unter dem Begriff "Insertionsmaterialien aus Kohlenstoff" werden im Sinne der vorliegenden Erfindung Materialien aus dem Element Kohlenstoff verstanden, die unter den oben definierten Begriff "Insertionsmaterialien" fallen. Eine weitere vorteilhafte Weiterbildung der erfindungsgemäßen wiederaufladbaren Batteriezelle sieht vor, dass das Insertionsmaterial enthaltend Kohlenstoff ausgewählt ist aus der Gruppe bestehend aus Hartkohlenstoff (engl. hard carbon), Weichkohlenstoff (engl. soft carbon), Graphen oder heteroatom gedopten Kohlenstoffen. Hartkohlenstoff (hard carbon) kann z.B. aus der Carbonisierung einer Vielzahl von Vorstufen wie z. B. Biomasse, Lignin, Cellulose und viele Arten von Polymeren synthetisiert werden. Kohlenstoffhaltige Materialien aus fossilen Brennstoffen (Koks, Pech usw.) sind im Allgemeinen als weich (graphitierbar) angesehen, und beschreiben die Gruppe Weichkohlenstoffe (soft carbon). Heteroatom gedopte Kohlenstoffe sind Kohlenstoffe, die in ihrer Struktur oder an der Oberfläche neben den Kohlenstoffatomen zusätzliche Atome zum Beispiel Stickstoff, Sauerstoff, Schwefel oder Phosphor enthalten.

Eine weitere vorteilhafte Weiterbildung der erfindungsgemäßen wiederaufladbaren Batteriezelle sieht vor, dass das Insertionsmaterial enthaltend Kohlenstoff Hartkohlenstoff (engl. hard carbon) ist.

Eine weitere vorteilhafte Weiterbildung der erfindungsgemäßen wiederaufladbaren Batteriezelle sieht vor, dass das Insertionsmaterial enthaltend Kohlenstoff Weichkohlenstoff (engl. soft carbon) ist.

Eine weitere vorteilhafte Weiterbildung der erfindungsgemäßen wiederaufladbaren Batteriezelle sieht vor, dass das Insertionsmaterial enthaltend Kohlenstoff Graphen ist.

Eine weitere vorteilhafte Weiterbildung der erfindungsgemäßen wiederaufladbaren Batteriezelle sieht vor, dass das Insertionsmaterial enthaltend Kohlenstoff heteroatom gedopter Kohlenstoff ist.

Eine weitere vorteilhafte Weiterbildung der erfindungsgemäßen wiederaufladbaren Batteriezelle sieht vor, dass die Natriumionen auch an der Oberfläche adsorbiert werden können.

Eine weitere vorteilhafte Weiterbildung der erfindungsgemäßen wiederaufladbaren Batteriezelle sieht vor, dass das natriumspeichernde Material der negativen Elektrode aus mindestens einem kohlenstofffreien Insertionsmaterial besteht, wie beispielsweise Natrium-Titanate, insbesondere Na₂Ti₃O₇ oder NaTi₂(PO₄)₃. Unter dem Begriff "kohlenstofffreie Insertionsmaterialien" werden im Sinne der vorliegenden Erfindung Materialien aus einem anderen Element als Kohlenstoff verstanden, die unter den oben definierten Begriff "Insertionsmaterialien" fallen.

Eine weitere vorteilhafte Weiterbildung der erfindungsgemäßen wiederaufladbaren Batteriezelle sieht vor, dass das natriumspeichernde Material der negativen Elektrode aus mindestens einem Natriumlegierungsbildendem Material besteht. Unter dem Begriff "Natriumlegierungsbildendem Material" werden im Sinne der vorliegenden Erfindung legierungsbildende Materialien wie oben definiert verstanden, die mit Natrium eine Legierung bilden. Als legierungsbildende Materialien können beispielsweise Natrium-speichernde Metalle und Metalllegierungen (z.B. Sn, Sb,) verwendet werden. Alternativ können Sulfide oder Oxide der Natrium-speichernden Metalle und Metalllegierungen (z.B. SnSₓ, SbSₓ, oxidische Gläser von Sn, Sb und dergleichen) als legierungsbildende Materialien sein.

Eine weitere vorteilhafte Weiterbildung der erfindungsgemäßen wiederaufladbaren Batteriezelle sieht vor, dass die mit Natrium legierungsbildenden Anodenaktivmaterialien schon vor der Verwendung in einer Batteriezelle Natrium enthalten. Diese Maßnahme verringert die Kapazitätsverluste z.B. durch die Deckschichtbildung im ersten Zyklus.

Eine weitere vorteilhafte Weiterbildung der erfindungsgemäßen wiederaufladbaren Batteriezelle sieht vor, dass das natriumspeichernde Material der negativen Elektrode aus mindestens einem natriumspeichernden Material besteht, welches ein Konversionsmaterial ist, wie oben definiert. Das Konversionsmaterial kann ausgewählt werden aus der Gruppe bestehend aus Sulfiden, Oxiden, Seleniden und Fluoriden der Metalle Ti, V, Cr, Mn, Fe, Co, Ni, Cu und Zn, insbesondere von Eisensulfiden (FeSₓ), Eisenseleniden (FeSeₓ), Eisenfluoriden (FeFₓ), Eisenoxiden (FeOₓ), Cobaltoxiden (CoOₓ), Nickeloxiden (NiOₓ) und Kupferoxiden (CuOₓ).

Eine weitere vorteilhafte Weiterbildung der erfindungsgemäßen wiederaufladbaren Batteriezelle sieht vor, dass die negative Elektrode aus einer Kombination der oben beschriebenen natriumspeichernden Materialien besteht. Zum Beispiel könnte eine Kombination von Zinn (Sb) und/oder Zinnsulfid (SnSₓ) und Hartkohlenstoff (engl. hard carbon) verwendet werden.

Eine weitere vorteilhafte Weiterbildung der erfindungsgemäßen wiederaufladbaren Batteriezelle sieht vor, dass die negative Elektrode porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Die Porosität stellt das Hohlraumvolumen zu Gesamtvolumen der negativen Elektrode dar, wobei das Hohlraumvolumen von sogenannten Poren bzw. Hohlräumen ausgebildet wird. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Eine weitere vorteilhafte Weiterbildung der erfindungsgemäßen Batteriezelle sieht vor, dass die negative Elektrode ein Ableitelement aufweist. Das bedeutet, dass die negative Elektrode neben dem aktiven Material bzw. Insertionsmaterial auch ein Ableitelement umfasst. Dieses Ableitelement dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 µm bis 20µm auf. Das aktive Material der negativen Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die negative Elektrode eine Gesamtdicke von mindestens 20 µm, bevorzugt mindestens 40 µm und besonders bevorzugt mindestens 60 µm aufweisen. Die maximale Dicke beträgt höchstens 200 µm, bevorzugt höchstens 150 µm und besonders bevorzugt höchstens 100 µm. Die flächenspezifische Kapazität der negativen Elektrode bezogen auf die Beschichtung einer Seite weist bei der Verwendung eines planaren Ableitelements vorzugsweise mindestens 0,5 mAh/cm² auf, wobei folgende Werte in dieser Reihenfolge weiter bevorzugt sind: 1 mAh/cm², 3 mAh/cm², 5 mAh/cm², 10 mAh/cm², 15 mAh/cm², 20 mAh/cm². Weiterhin besteht auch die Möglichkeit, dass das Ableitelement dreidimensional in Form einer porösen Metallstruktur, insbesondere in Form eines Metallschaums ausgebildet sein kann. Der Begriff "dreidimensionale poröse Metallstruktur" bezeichnet dabei jede aus Metall bestehende Struktur, die sich nicht nur wie das dünne Metallblech bzw. die Metallfolie über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei der Menge an eingearbeitetem bzw. aufgebrachtem aktivem Material handelt es sich um die Beladung der negativen Elektrode. Wenn das Ableitelement dreidimensional in Form einer porösen Metallstruktur, insbesondere in Form eines Metallschaums ausgebildet ist, dann weist die negative Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Die Dicke der Elektroden ist in diesem Fall deutlich größer im Vergleich zu negativen Elektroden, welche bei organischen Natrium-Ionen-Zellen Anwendung finden. Eine weitere vorteilhafte Ausgestaltung sieht vor, dass die flächenspezifische Kapazität der negativen Elektrode bei der Verwendung eines dreidimensionalen Ableitelements, insbesondere in Form eines Metallschaums vorzugsweise mindestens 2,5 mAh/cm² beträgt, wobei folgende Werte in dieser Reihenfolge weiter bevorzugt sind: 5 mAh/cm², 15 mAh/cm², 25 mAh/cm², 35 mAh/cm², 45 mAh/cm², 55 mAh/cm², 65 mAh/cm², 75 mAh/cm². Wenn das Ableitelement dreidimensional in Form einer porösen Metallstruktur, insbesondere in Form eines Metallschaums ausgebildet ist, beträgt die Menge des aktiven Materials der negativen Elektrode, d.h. die Beladung der Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm². Diese Beladung der negativen Elektrode wirkt sich positiv auf den Ladevorgang sowie den Entladevorgang der wiederaufladbaren Batteriezelle aus.

Das Ableitelement der negativen Elektrode kann z.B. aus Nickel oder Kupfer bestehen. Das Potential des aktiven Metalls Natrium liegt gegenüber dem Potential des aktiven Metalls Lithium, das z.B. in Lithium-Ionen-Batterien verwendet wird, leicht höher. Dadurch kann für Natriumzellen auch ein Ableiter aus Aluminium eingesetzt werden, ohne dass das Natrium, im Gegensatz zum Lithium, mit dem Aluminium legiert.

Die negative Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der negativen Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der negativen Elektrode vor.

Die negative Elektrode weist in einer weiteren vorteilhaften Weiterbildung der erfindungsgemäßen Batteriezelle zumindest ein Leitfähigkeitsadditiv auf. Das Leitfähigkeitsadditiv sollte bevorzugt ein geringes Gewicht, eine hohe chemische Beständigkeit und eine hohe spezifische Oberfläche aufweisen, Beispiele für Leitfähigkeitsadditive sind partikulärer Kohlenstoff (carbon black, Super P, acetylen black), faserartiger Kohlenstoff (CarbonNanoTtubes CNT, Kohelnstoff(nano)fasern), feinverteilte Graphite und Graphen(-Nanos-heets).

### Elektrolyt

Nachfolgend sind vorteilhafte Weiterbildungen der wiederaufladbaren Batteriezelle im Hinblick auf den auf SO₂-basierenden Elektrolyten beschrieben.

Eine erste vorteilhafte Weiterbildung der erfindungsgemäßen wiederaufladbaren Batteriezelle sieht vor, dass die Substituenten R¹, R², R³ und R⁴ des ersten Leitsalzes unabhängig voneinander die Struktur der chemischen Gruppe -OR⁵ aufweisen, wobei R⁵ ausgewählt ist aus der Gruppe bestehend aus C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl, wobei die aliphatischen, cyclischen, aromatischen und heteroaromatischen Gruppen unsubstituiert oder substituiert sein können.

Eine weitere vorteilhafte Weiterbildung der erfindungsgemäßen wiederaufladbaren Batteriezelle sieht vor, dass der Substituent R⁵ ausgewählt aus der Gruppe bestehend aus
- C₁-C₆ Alkyl, bevorzugt C₂-C₄ Alkyl, besonders bevorzugt 2-Propyl, Methyl und Ethyl;
- C₂-C₆ Alkenyl, bevorzugt C₂-C₄ Alkenyl, besonders bevorzugt Ethenyl und Propenyl;
- C₂-C₆-Alkinyl, bevorzugt C₂-C₄-Alkinyl;
- C₃-C₆ Cycloalkyl;
- Phenyl; und
- C₅-C₇ Heteroaryl;
- wobei die aliphatischen, cyclischen, aromatischen und heteroaromatischen Gruppen unsubstituiert oder substituiert sein können.

Die Definitionen der Begriffe "C₁-C₆ Alkyl", "C₂-C₆ Alkenyl", "C₂-C₆-Alkinyl", "C₃-C₆ Cycloalkyl" und "Heteroaryl" sind gleich wie oben bereits definiert.

Eine weitere vorteilhafte Weiterbildung der erfindungsgemäßen wiederaufladbaren Batteriezelle sieht vor, dass zur Verbesserung der Löslichkeit des ersten Leitsalzes in dem auf SO₂-basierenden Elektrolyten zumindest ein einzelnes Atom oder eine Atomgruppe des Substituenten R⁵ durch ein Halogenatom, insbesondere ein Fluoratom, oder durch eine chemische Gruppe substituiert ist, wobei die chemische Gruppe ausgewählt ist aus der Gruppe bestehend aus C₁-C₄-Alkyl, C₂-C₄-Alkenyl, C₂-C₄-Alkinyl, Phenyl, Benzyl, und voll- und teilhalogeniertem, insbesondere voll- und teilfluoriertem, C₁C₄-Alkyl, C₂-C₄-Alkenyl, C₂-C₄-Alkinyl, Phenyl und Benzyl. Die chemischen Gruppen C₁-C₄-Alkyl, C₂-C₄-Alkenyl, C₂-C₄-Alkinyl, Phenyl und Benzyl weisen dieselben Eigenschaften bzw. chemischen Strukturen auf, wie die zuvor beschriebenen Kohlenwasserstoffgruppen.

Eine besonders hohe Löslichkeit des ersten Leitsalzes in dem auf SO₂-basierenden Elektrolyten kann dadurch erreicht werden, dass zumindest eine Atomgruppe des Substituenten R⁵ vorzugsweise eine CF₃-Gruppe oder eine OSO₂CF₃-Gruppe ist.

Eine weitere vorteilhafte Weiterbildung der erfindungsgemäßen wiederaufladbaren Batteriezelle sieht vor, dass die Substituenten R¹, R², R³ und R⁴ Hydroxygruppen (-OH) sind. Das Wasserstoffatom (H) dieser Hydroxygruppen kann durch eine chemische Gruppe substituiert sein, die ausgewählt ist aus der Gruppe bestehend aus C₁-C₄-Alkyl, C₂-C₄-Alkenyl, C₂-C₄-Alkinyl, Phenyl, Benzyl, und voll- und teilhalogeniertem, insbesondere voll- und teilfluoriertem, C₁-C₄-Alkyl, C₂-C₄-Alkenyl, C₂-C₄-Alkinyl, Phenyl und Benzyl. Die chemischen Gruppen C₁-C₄-Alkyl, C₂-C₄-Alkenyl, C₂-C₄-Alkinyl, Phenyl und Benzyl weisen dieselben Eigenschaften bzw. chemischen Strukturen auf, wie die zuvor beschriebenen Kohlenwasserstoffgruppen und fallen unter die oben ausgeführten Definitionen.

Eine weitere vorteilhafte Weiterbildung der erfindungsgemäßen wiederaufladbaren Batteriezelle sieht vor, dass das erste Leitsalz ausgewählt aus der Gruppe bestehend aus

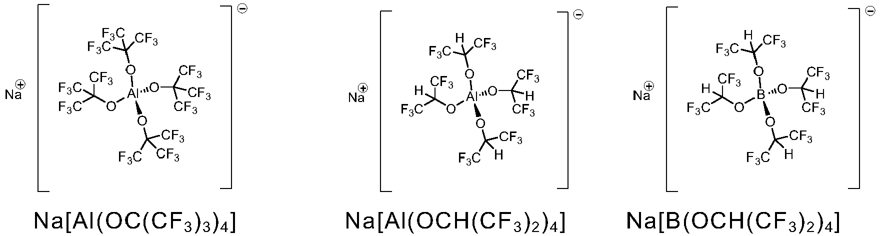

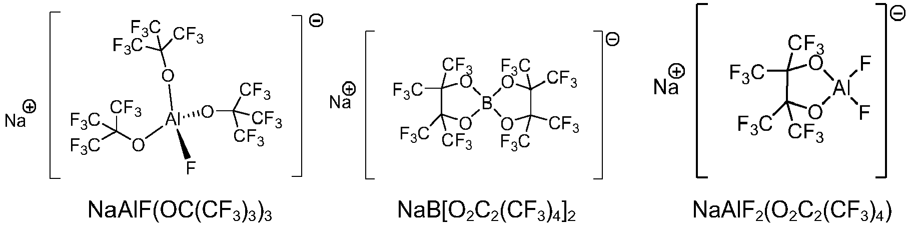

Um die Leitfähigkeit und/oder weitere Eigenschaften des Elektrolyten an einen gewünschten Wert anzupassen, weist der Elektrolyt in einer weiteren vorteilhaften Ausgestaltung der erfindungsgemäßen wiederaufladbaren Batteriezelle zumindest ein zweites, von dem ersten Leitsalz nach Formel (I) abweichendes Leitsalz auf. Das bedeutet, dass der Elektrolyt neben dem ersten Leitsalz ein oder auch weitere zweite Leitsalze enthalten kann, die sich in ihrer chemischen Zusammensetzung sowie ihrer chemischen Struktur von dem ersten Leitsalz unterscheiden.

In einer weiteren vorteilhaften Ausgestaltung der erfindungsgemäßen wiederaufladbaren Batteriezelle ist das zweite Leitsalz eine Alkalimetallverbindung, insbesondere eine Natriumverbindung. Die Alkalimetallverbindung oder die Natriumverbindung sind ausgewählt aus der Gruppe bestehend aus einem Aluminat, einem Halogenid, einem Oxalat, einem Borat, einem Phosphat, einem Arsenat und einem Gallat. Vorzugsweise ist das zweite Leitsalz ein Natriumtetrahalogenoaluminat, insbesondere NaAlCl₄.

Des Weiteren enthält der Elektrolyt in einer weiteren vorteilhaften Ausgestaltung der erfindungsgemäßen wiederaufladbaren Batteriezelle zumindest ein Additiv. Dieses Additiv ist vorzugsweise ausgewählt aus der Gruppe bestehend aus Vinylencarbonat und seinen Derivaten, Vinylethylencarbonat und seinen Derivaten, Methylethylencarbonat und seinen Derivaten, Natrium(bisoxalato)borat, Natriumdifluor(oxalato)borat, Natriumtetrafluor(oxalato)phosphat, Natriumoxalat, 2-Vinylpyridin, 4-Vinylpyridin, cyclische Exomethylencarbonate, Sultone, cyclische und acyclische Sulfonate, acyclische Sulfite, cyclische und acyclische Sulfinate, organische Ester anorganischer Säuren, acyclische und cyclische Alkane, welche acyclischen und cyclischen Alkane einen Siedepunkt bei 1 bar von mindestens 36 °C aufweisen, aromatische Verbindungen, halogenierte cyclische und acyclische Sulfonylimide, halogenierte cyclische und acyclische Phosphatester, halogenierte cyclische und acyclische Phosphine, halogenierte cyclische und acyclische Phosphite, halogenierte cyclische und acyclische Phosphazene, halogenierte cyclische und acyclische Silylamine, halogenierte cyclische und acyclische halogenierte Ester, halogenierte cyclische und acyclische Amide, halogenierte cyclische und acyclische Anhydride und halogenierte organische Heterocyclen.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:
(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes und
(iv) 0 bis 10 Gew.-% des Additivs.

Wie bereits zuvor erwähnt, kann der Elektrolyt nicht nur ein erstes Leitsalz nach Formel (I) und ein zweites Leitsalz enthalten, sondern jeweils auch mehrere erste Leitsalze nach Formel (I) und mehrere zweite Leitsalze. Die zuvor genannten prozentualen Anteile schließen im letztgenannten Fall auch mehrere erste Leitsalze und mehrere zweite Leitsalze ein. Die Stoffmengenkonzentration des ersten Leitsalzes liegt im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten.

Eine weitere vorteilhafte Weiterbildung der erfindungsgemäßen wiederaufladbaren Batteriezelle sieht vor, dass der Elektrolyt mindestens 0,1 Mol SO₂, bevorzugt mindestens 1 Mol SO₂, weiter bevorzugt mindestens 5 Mol SO₂, weiter bevorzugt mindestens 10 Mol SO₂ und besonders bevorzugt mindestens 20 Mol SO₂ je Mol Leitsalz enthält. Der Elektrolyt kann auch sehr hohe molare Anteile an SO₂ enthalten, wobei der bevorzugte obere Grenzwert mit 2600 Mol SO₂ je Mol Leitsalz angegeben werden kann und Obergrenzen von 1500, 1000, 500 und 100 Mol SO₂ je Mol Leitsalz in dieser Reihenfolge weiter bevorzugt sind. Der Begriff "je Mol Leitsalz" bezieht sich dabei auf alle Leitsalze, die im Elektrolyten enthalten sind. Auf SO₂-basierende Elektrolyte mit einem derartigen Konzentrationsverhältnis zwischen SO₂ und dem Leitsalz haben den Vorteil, dass sie im Vergleich zu den aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle. Die Konzentration an SO₂ im Elektrolyten wirkt sich auf dessen Leitfähigkeit aus. Somit kann durch die Wahl der SO₂-Konzentration die Leitfähigkeit des Elektrolyten an die geplante Verwendung einer mit diesem Elektrolyten betriebenen wiederaufladbaren Batteriezelle angepasst werden. Der Gesamtgehalt von SO₂ und dem ersten Leitsalz kann größer als 50 Gewichtsprozent (Gew%) des Gewichts des Elektrolyten sein, bevorzugt größer als 60 Gew%, weiter bevorzugt größer als 70 Gew%, weiter bevorzugt größer als 80 Gew%, weiter bevorzugt größer als 85 Gew%, weiter bevorzugt größer als 90 Gew%, weiter bevorzugt größer als 95 Gew% oder weiter bevorzugt größer als 99 Gew%.

Der Elektrolyt kann mindestens 5 Gew% SO₂ bezogen auf die Gesamtmenge des in der wiederaufladbaren Batteriezelle enthaltenen Elektrolyten enthalten, wobei Werte von 20 Gew% SO₂, 40 Gew% SO₂ und 60 Gew% SO₂ weiter bevorzugt sind. Der Elektrolyt kann auch bis zu 95 Gew% SO₂ enthalten, wobei Maximalwerte von 80 Gew% SO₂ und 90 Gew% SO₂ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Lösungsmittel aufweist. Vorzugsweise kann der Anteil an organischen Lösungsmitteln im Elektrolyten, welche beispielsweise in Form eines oder einer Mischung mehrerer Lösungsmittel vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Lösungsmitteln oder sogar deren vollständige Abwesenheit ist der Elektrolyt entweder kaum oder gar nicht brennbar. Dies erhöht die Betriebssicherheit einer mit einem derartigen auf SO₂-basierenden Elektrolyten betriebenen wiederaufladbaren Batteriezelle.

Bezogen auf das Gesamtgewicht der Elektrolytzusammensetzung weist der Elektrolyt in einer weiteren vorteilhaften Weiterbildung der wiederaufladbaren Batteriezelle folgende Zusammensetzung auf:
(i) 5 bis 99,4 Gew.-% Schwefeldioxid,
(ii) 0,6 bis 95 Gew.-% des ersten Leitsalzes,
(iii) 0 bis 25 Gew.-% des zweiten Leitsalzes,
(iv) 0 bis 10 Gew.-% des Additivs und
(v) 0 bis 50 Gew.-% eines organischen Lösungsmittels.

### Positive Elektrode

Nachfolgend sind vorteilhafte Weiterbildungen der erfindungsgemäßen wiederaufladbaren Batteriezelle im Hinblick auf die positive Elektrode beschrieben:
Eine erste vorteilhafte Weiterbildung der erfindungsgemäßen wiederaufladbaren Batteriezelle sieht vor, dass die positive Elektrode bevorzugt mindestens bis zu einem oberen Potential von 3,6 Volt, weiter bevorzugt mindestens bis zu einem oberen Potential von 3,8 Volt, weiter bevorzugt mindestens bis zu einem oberen Potential von 4,0 Volt, weiter bevorzugt mindestens bis zu einem oberen Potential von 4,2 Volt, weiter bevorzugt mindestens bis zu einem oberen Potential von 4,4 Volt und besonders bevorzugt bis zu einem oberen Potential von 4,6 Volt ladbar ist.

Die positive Elektrode enthält in einer weiteren vorteilhaften Weiterbildung der erfindungsgemäßen wiederaufladbaren Batteriezelle mindestens ein aktives Material. Dieses kann Ionen des aktiven Metalls Natrium speichern und während des Betriebs der Batteriezelle die Ionen des aktiven Metalls Natrium abgeben und wieder aufnehmen.

Die positive Elektrode enthält in einer weiteren vorteilhaften Weiterbildung der erfindungsgemäßen wiederaufladbaren Batteriezelle zumindest eine Interkalationsverbindung. Unter dem Begriff "Interkalationsverbindung" ist im Sinne der vorliegenden Erfindung eine Unterkategorie der zuvor beschriebenen Insertionsmaterialien zu verstehen. Diese Interkalationsverbindung fungiert als Wirtsmatrix, welche Leerstellen aufweist, die untereinander verbunden sind. In diese Leerstellen können die Ionen des aktiven Metalls während des Entladevorgangs der wiederaufladbaren Batteriezelle eindiffundieren und dort eingelagert werden. Im Rahmen dieser Einlagerung der Ionen des aktiven Metalls kommt es in der Wirtsmatrix nur zu geringen oder gar keinen strukturellen Änderungen.

Die positive Elektrode enthält in einer weiteren vorteilhaften Weiterbildung der erfindungsgemäßen wiederaufladbaren Batteriezelle als aktives Material zumindest eine Umwandlungsverbindung. Unter dem Begriff "Umwandlungsverbindungen" sind im Sinne der vorliegenden Erfindung Materialien zu verstehen, die während der elektrochemischen Aktivität andere Materialien formen; d.h. während des Ladens und Entladens der Batteriezelle werden chemische Bindungen gebrochen und neu geknüpft. Während der Aufnahme oder Abgabe der Ionen des aktiven Metalls kommt es in der Matrix der Umwandlungsverbindung zu strukturellen Änderungen.

Das aktive Material weist in einer weiteren vorteilhaften Weiterbildung der erfindungsgemäßen wiederaufladbaren Batteriezelle die Zusammensetzung NaₓM'_{y}M"_{z}Oₐ auf, worin
- M' mindestens ein Metall ist, das ausgewählt ist aus der Gruppe bestehend aus den Elementen Ti, V, Cr, Mn, Fe, Co, Ni, Cu und Zn;
- M" mindestens ein Element ist, das ausgewählt ist aus der Gruppe bestehend ausden Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist

Die Indizes y und z in der Zusammensetzung NaₓM'_{y}M"_{z}Oₐ beziehen sich dabei auf die Gesamtheit der Metalle und Elemente, die durch M' bzw. M" repräsentiert werden. Umfasst zum Beispiel M' zwei Metalle M'¹ und M'², so gilt für den Index y: y=y1+y2, wobei y1 und y2 die Indizes der Metalle M'¹ und M'² darstellen. Die Indizes x, y, z und a müssen so gewählt werden, dass eine Ladungsneutralität innerhalb der Zusammensetzung herrscht. Beispiele für Verbindungen bei denen M' zwei Metalle umfasst sind Natriumnickelmangancobaltoxide der Zusammensetzung NaₓNi_{y1}Mn_{y2}Co_{z}O₂ mit M'¹=Ni, M'²=Mn und M"=Co. Beispiele für Verbindungen in denen z=0 ist, die also kein weiteres Metall oder Element M" aufweisen sind Natriumkobaltoxide NaₓCo_{y}Oₐ.

Umfasst zum Beispiel M" zwei Elemente, zum einen ein Metall M"¹ und zum anderen Phosphor als M"², so gilt für den Index z: z=z1+z2, wobei z1 und z2 die Indizes des Metalls M"¹ und des Phosphors (M"²) darstellen. Die Indizes x, y, z und a müssen so gewählt werden, dass eine Ladungsneutralität innerhalb der Zusammensetzung herrscht. Beispiele für Verbindungen bei denen M" ein Metall M"¹ und Phosphor als M"² umfasst sind Natriumeisenmanganphosphate NaₓFe_{y}Mn_{z1}P_{z2}O₄ mit M`=Fe, M"¹=Mn und M"²=P und z2=1. In einer weiteren Zusammensetzung kann M" zwei Nichtmetalle, zum Beispiel Fluor als M"¹ und Schwefel als M"², umfassen. Beispiele für solche Verbindungen sind Natriumeisenfluorsulfate NaₓFe_{y}F_{z1}S_{z2}O₄ mit M`=Fe, M"₁=F und M"₂=P.

Eine weitere vorteilhafte Weiterbildung der erfindungsgemäßen wiederaufladbaren Batteriezelle sieht vor, dass die Verbindungen NaₓM'_{y}M"_{z}Oₐ die Strukturen von Schichtoxiden aufweisen. Dabei können M' oder M" zwei oder mehr Metalle M'¹, M'², M'³ etc. oder M"¹, M"², M"³ etc. sein. Beispiele für solche Verbindungen sind NaNi_{0.5}Mn_{0.2}Ti_{0.3}O₃, Na_{0.90}Cu_{0.22}Fe_{0.30}Mn_{0.48}O₂, Na_{2/3}Ni_{2/3}Te_{1/3}O₂, Na_{2/3}Fe_{1/2}Mn_{1/2}O₂, NaₓMnO₂, NaFe_{1/2}Mn_{1/2}O₂, Na(Fe_{1/3}Mn_{1/3}Ni_{1/3})O₂, und Na[Ni_{0.4}Fe_{0.2}Mn_{0.2}Ti_{0.2}]O₂. Bevorzugt sind Verbindungen bei denen M' aus den Metallen Nickel und Mangan besteht und M" Cobalt ist, sodass die Verbindung die Formel NaₓNi_{y1}Mn_{y2}Co_{z}Oₐ, aufweist, wobei y1 und y2 unabhängig voneinander Zahlen größer 0 sind. Es kann sich dabei um Zusammensetzungen der Formel Naₓ[Ni_{y1}Mn_{y2}Co_{z}]O₂ (NMC) handeln, d.h. um Natriumnickelmangancobaltoxide, die die Struktur von Schichtoxiden aufweisen. Beispiele für diese aktiven Materialien aus Natriumnickelmangancobaltoxid sind Na[Ni_{1/3}Mn_{1/3}Co_{1/3}]O₂ und Na_{0.6}[Ni_{0.25}Mn_{0.5}Co_{0.25}]O₂.

Eine weitere vorteilhafte Weiterbildung der erfindungsgemäßen wiederaufladbaren Batteriezelle sieht vor, dass die Zusammensetzung die Formel NaₓM'_{y}M"_{z}O₄ aufweist. Bei diesen Verbindungen handelt es sich um Spinell-Strukturen. Zum Beispiel können M' Kobalt und M" Mangan sein. In diesem Fall handelt es sich bei dem aktiven Material um Natriumcobaltmanganoxid (NaCoMnO₄).

In einer weiteren vorteilhaften Weiterbildung weist die Verbindung die Zusammensetzung NaₓM'_{y}M"¹_{z1}M"²_{z2}Oₐ auf, wobei M"¹ und M"² jeweils mindestens ein Element ist, das ausgewählt ist aus der Gruppe bestehend aus den Elementen der Gruppen 2, 3, 4, 5, 6, 7, 8, 9, 10, 11, 12, 13, 14, 15 und 16 des Periodensystems der Elemente und wobei M"² zusammen mit Oₐ mindestens eine Polyanion-Struktureinheit bilden. Bei der Polyanion-Struktureinheit kann es sich zum Beispiel um Strukturen der Zusammensetzungen (M"²O₄)ⁿ⁻, (M"²ₘO₃ₘ₊₁)ⁿ⁻ oder (M"²O₃)ⁿ⁻ handeln, worin m und n unabhängig voneinander Zahlen grö-ßer 0 sind. Beispiele für solche Anionen sind (SO₄)²⁻, (PO₄)³⁻, (SiO₄)²⁻, (AsO₄)³⁻, (MoO₄)²⁻, (WO₄)²⁻, (P₂O₇)⁴⁻, (CO₃)²⁻ und (BO₃)³⁻.

Ist M"² das Element Phosphor, so handelt es sich bei der Verbindung mit der Zusammensetzung NaₓM'_{y}M"_{z1}M"_{z2}Oₐ um sogenannte Natriummetallphosphate. Beispiele für diese Verbindungen sind Na₃V₂(PO₄)₃, NaVPO₄F, Na₂CoP₂O₇, Na₄Ni₃(PO₄)₂P₂O₇, Na₂MnPO₄F und Na₂MnP₂O₇. Ist M"² das Element Schwefel, so handelt es sich bei der Verbindung mit der Zusammensetzung NaₓM'_{y}M"_{z1}M"_{z2}Oₐ um sogenannte Natriummetallsulfate. Beispiele für diese Verbindungen sind NaFeSO₄F und NaFe₂(PO₄)(SO₄)₂. Bei der zweiten Verbindung handelt es sich um eine Verbindung mit zwei Polyanion-Struktureinheiten. Ist M"² das Element Silizium, so handelt es sich bei der Verbindung mit der Zusammensetzung NaₓM'_{y}M"_{z1}M"_{z2}Oₐ um sogenannte Natriummetallsilikate. Ein Beispiel für diese Verbindungen ist Na₂FeSiO₄.

Das aktive Material weist in einer weiteren vorteilhaften Weiterbildung der erfindungsgemäßen wiederaufladbaren Batteriezelle die Zusammensetzung NaₓM'_{y}[Fe(CN)₆]ₐ • nH₂O auf, wobei M' mindestens ein Metall ist, das ausgewählt ist aus der Gruppe bestehend aus den Elementen Ti, V, Cr, Mn, Fe, Co, Ni, Cu und Zn. Dabei kann M' zwei oder mehr Metalle M'¹, M'², M'³ etc. sein. Dann gilt für den Index y: y=y1+y2, wobei y1 und y2 die Indizes der Metalle M'¹ und M'² darstellen. n ist eine Zahl größer oder gleich Null. x, alle Indices y (y, y1, y2 etc.) und a sind unabhängig voneinander Zahlen größer 0. Bei dieser Art von Verbindungen handelt es sich um Hexacyanoferrate, auch bekannt unter den englischen Bezeichnungen "Prussian blue" und "Prussian white". Beispiele für solche Verbindungen sind Na₂NiFe(CN)₆, FeFe(CN)₆ • 4H₂O, Na_{0.61}FeFe(CN)₆, Na_{1.89}Mn[Fe(CN)₆]_{0.97} und NaNi_{0.3}Mn_{0.7} Fe(CN)₆.

Die positive Elektrode enthält als aktives Material in einer weiteren vorteilhaften Weiterbildung der erfindungsgemäßen wiederaufladbaren Batteriezelle zumindest ein aktives Material, welches eine Umwandlungsverbindung darstellt. Umwandlungsverbindungen durchlaufen während der Aufnahme des aktiven Metalls, z.B. Natrium, eine Festkörper-Redoxreaktion bei der sich die Kristallstruktur des Materials ändert. Dieses geschieht unter dem Aufbrechen und Rekombinieren von chemischen Bindungen. Vollständig reversible Reaktionen von Umwandlungsverbindungen können z.B. folgendermaßen lauten:

| | |
|---|---|
| Typ A: | MX_{z} + y Na ↔ M + z Na_{(y/z)}X |
| Typ B: | X + y Na ↔ Na_{y}X |

Die Umwandlungsverbindungen sind ausgewählt aus der Gruppe bestehend aus Sulfiden, Oxiden, Seleniden und Fluoriden der Metalle Ti, V, Cr, Mn, Fe, Co, Ni, Cu und Zn, insbesondere von Eisensulfiden (FeSₓ), Eisenseleniden (FeSeₓ), Eisenfluoriden (FeFₓ), Eisenoxiden (FeOₓ), Cobaltoxiden (CoOₓ), Nickeloxiden (NiOₓ) und Kupferoxiden (CuOₓ).

Eine weitere vorteilhafte Weiterbildung der erfindungsgemäßen wiederaufladbaren Batteriezelle sieht vor, dass die positive Elektrode zumindest eine Metallverbindung enthält. Diese Metallverbindung ist ausgewählt aus der Gruppe bestehend aus von einem Metalloxid, einem Metallhalogenid und einem Metallphosphat. Vorzugsweise ist das Metall dieser Metallverbindung ein Übergangsmetall der Ordnungszahlen 22 bis 28 des Periodensystems der Elemente, insbesondere Kobalt, Nickel, Mangan oder Eisen.

Eine weitere vorteilhafte Weiterbildung der erfindungsgemäßen wiederaufladbaren Batteriezelle sieht vor, dass die positive Elektrode zumindest eine Metallverbindung enthält, die die chemische Struktur eines Schichtoxids, eines Spinells, einer Polyanionischen Verbindung oder einer Umwandlungsverbindung hat.

Es liegt im Rahmen der Erfindung, dass die positive Elektrode als aktives Material mindestens eine der beschriebenen Verbindungen oder eine Kombination der Verbindungen enthält. Unter einer Kombination der Verbindungen versteht man eine positive Elektrode, die mindestens zwei der beschriebenen Materialien enthält.

Eine weitere vorteilhafte Weiterbildung der erfindungsgemäßen Batteriezelle sieht vor, dass die positive Elektrode ein Ableitelement aufweist. Das bedeutet, dass die positive Elektrode neben dem aktiven Material auch ein Ableitelement umfasst. Dieses Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material. Dieses Ableitelement kann planar in Form eines dünnen Metallblechs oder einer dünnen Metallfolie ausgebildet sein. Die dünne Metallfolie weist vorzugsweise eine durchbrochene bzw. netzartige Struktur auf. Das planare Ableitelement kann auch aus einer mit Metall beschichtetet Kunststofffolie bestehen. Diese Metallbeschichtungen weisen eine Dicke im Bereich von 0,1 µm bis 20µm auf. Das aktive Material der positiven Elektrode ist vorzugsweise auf die Oberfläche des dünnen Metallblechs, der dünnen Metallfolie oder der mit Metall beschichteten Kunststofffolie aufgebracht. Das aktive Material kann auf der Vorder- und/oder der Rückseite des planaren Ableitelements aufgebracht sein. Derartige planare Ableitelemente weisen eine Dicke im Bereich von 5 µm bis 50 µm auf. Eine Dicke des planaren Ableitelements im Bereich von 10 µm bis 30 µm ist bevorzugt. Bei der Verwendung von planaren Ableitelementen kann die positive Elektrode eine Gesamtdicke von mindestens 20 µm, bevorzugt mindestens 40 µm und besonders bevorzugt mindestens 60 µm aufweise. Die maximalen Dicke beträgt höchstens 200 µm, bevorzugt höchstens 150 µm und besonders bevorzugt höchstens 100 µm. Die flächenspezifische Kapazität der positiven Elektrode bezogen auf die Beschichtung einer Seite weist bei der Verwendung eines planaren Ableitelements vorzugsweise mindestens 0,5 mAh/cm² auf, wobei folgende Werte in dieser Reihenfolge weiter bevorzugt sind: 1 mAh/cm², 3 mAh/cm², 5 mAh/cm², 10 mAh/cm², 15 mAh/cm², 20 mAh/cm².

Weiterhin besteht auch die Möglichkeit, dass das Ableitelement der positiven Elektrode dreidimensional in Form einer porösen Metallstruktur, insbesondere in Form eines Metallschaums ausgebildet ist. Die dreidimensionale poröse Metallstruktur ist derartig porös, dass das aktive Material der positiven Elektrode in die Poren der Metallstruktur eingearbeitet werden kann. Bei der Menge an eingearbeitetem bzw. aufgebrachten aktivem Material handelt es sich um die Beladung der positiven Elektrode. Wenn das Ableitelement dreidimensional in Form einer porösen Metallstruktur, insbesondere in Form eines Metallschaums ausgebildet ist, dann weist die positive Elektrode vorzugsweise eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Eine weitere vorteilhafte Ausgestaltung sieht vor, dass die flächenspezifische Kapazität der positiven Elektrode bei der Verwendung eines dreidimensionalen Ableitelements, insbesondere in Form eines Metallschaums vorzugsweise mindestens 2,5 mAh/cm² beträgt, wobei folgende Werte in dieser Reihenfolge weiter bevorzugt sind: 5 mAh/cm², 15 mAh/cm², 25 mAh/cm², 35 mAh/cm², 45 mAh/cm², 55 mAh/cm², 65 mAh/cm², 75 mAh/cm². Wenn das Ableitelement dreidimensional in Form einer porösen Metallstruktur, insbesondere in Form eines Metallschaums ausgebildet ist, beträgt die Menge des aktiven Materials der positiven Elektrode, d.h. die Beladung der Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm². Diese Beladung der positiven Elektrode wirkt sich positiv auf den Ladevorgang sowie den Entladevorgang der wiederaufladbaren Batteriezelle aus.

Die positive Elektrode weist in einer weiteren vorteilhaften Weiterbildung der erfindungsgemäßen Batteriezelle zumindest ein Bindemittel auf. Dieses Bindemittel ist vorzugsweise ein fluoriertes Bindemittel, insbesondere ein Polyvinylidenfluorid und/oder ein Terpolymer, das aus Tetrafluorethylen, Hexafluorpropylen und Vinylidenfluorid ausgebildet ist. Es kann jedoch auch ein Bindemittel sein, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Weiterhin kann das Bindemittel auch aus einem Polymer bestehen, das auf monomeren Styrol- und Butadien-Struktureinheiten basiert. Außerdem kann das Bindemittel auch ein Bindemittel aus der Gruppe der Carboxymethylcellulosen sein. Das Bindemittel liegt in der positiven Elektrode vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 Gew% und besonders bevorzugt höchstens 2 Gew% bezogen auf das Gesamtgewicht der positiven Elektrode vor.

Aufbau der wiederaufladbaren Batteriezelle
Nachfolgend sind vorteilhafte Weiterbildungen der erfindungsgemäßen wiederaufladbaren Batteriezelle im Hinblick auf deren Aufbau beschrieben:
Um die Funktion der wiederaufladbaren Batteriezelle weiter zu verbessern, sieht eine weitere vorteilhafte Weiterbildung der erfindungsgemäßen wiederaufladbaren Batteriezelle vor, dass die wiederaufladbaren Batteriezelle mehrere negative Elektroden und mehrere Hochvoltelektroden umfasst, die alternierend gestapelt in dem Gehäuse angeordnet sind. Hierbei sind die positiven Elektroden und die negativen Elektroden vorzugsweise jeweils durch Separatoren voneinander elektrisch getrennt. Die wiederaufladbare Batteriezelle kann jedoch auch als Wickelzelle ausgebildet sein, bei welcher die Elektroden aus dünnen Lagen bestehen, die zusammen mit einem Separatormaterial aufgewickelt sind. Die Separatoren trennen einerseits die positive Elektrode und die negative Elektrode räumlich und elektrisch und sind andererseits unter anderem für die Ionen des aktiven Metalls durchlässig. Auf diese Weise entstehen große elektrochemisch wirksame Oberflächen, die eine entsprechend hohe Stromausbeute ermöglichen.

Der Separator kann aus einem Vlies, einer Membran, einem Gewebe, einem Gewirke, einem organischen Material, einem anorganischen Material oder aus einer Kombination hiervon ausgebildet sein. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert, insbesondere PVDF, ETFE, PTFE), Polyestern, Polyamiden oder Polysulfonen bestehen. Separatoren, die eine Kombination von organischen und anorganischen Materialien enthalten, sind zum Beispiel Glasfaser-Textilmaterialien, bei denen die Glasfasern mit einer geeigneten Polymeren Beschichtung versehen sind. Die Beschichtung enthält vorzugsweise ein fluorhaltiges Polymer wie beispielsweise Polytetrafluorethylen (PTFE), Ethylen-Tetrafluorethylen (ETFE), Perfluorethylenpropylen (FEP), THV (Terpolymer aus Tetrafluorethylen, Hexafluorethylen und Vinylidenfluorid), ein Perfluoralkoxy-Polymer (PFA), Aminosilan, Polypropylen oder Polyethylen (PE). Der Separator kann im Gehäuse der wiederaufladbaren Batteriezelle auch gefaltet vorliegen, beispielsweise in Form eines sogenannten "Z-Foldings". Bei diesem Z-Folding ist ein streifenförmiger Separator durch bzw. um die Elektroden z-artig gefaltet. Weiterhin kann der Separator auch als Separatorpapier ausgebildet sein.

Es liegt auch im Rahmen der Erfindung, dass der Separator als Umhüllung ausgebildet sein kann, wobei jede Hochvoltelektrode oder jede negative Elektrode von der Umhüllung umhüllt ist. Die Umhüllung kann aus einem Vlies, einer Membran, einem Gewebe, einem Gewirke, einem organischen Material, einem anorganischen Material oder aus einer Kombination hiervon ausgebildet sein.

Eine Umhüllung der positiven Elektrode führt zu einer gleichmäßigeren Ionenwanderung und Ionenverteilung in der wiederaufladbaren Batteriezelle. Je gleichmäßiger die Ionenverteilung, insbesondere in der negativen Elektrode ist, desto höher kann die mögliche Beladung der negativen Elektrode mit aktivem Material und infolgedessen die nutzbare Kapazität der wiederaufladbaren Batteriezelle sein. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der wiederaufladbaren Batteriezelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben.

Weitere vorteilhafte Eigenschaften der Erfindung werden nachfolgend anhand von Figuren, Beispielen und Experimenten näher beschrieben und erläutert.
- Figur 1:: zeigt ein erstes Ausführungsbeispiel einer erfindungsgemäßen wiederaufladbaren Batteriezelle in einer Querschnittsdarstellung;
- Figur 2:: zeigt eine elektronenmikroskopische Aufnahme der dreidimensionalen porösen Struktur des Metallschaums des ersten Ausführungsbeispiels aus Figur 1 als Detaildarstellung;
- Figur 3:: zeigt ein zweites Ausführungsbeispiel einer erfindungsgemäßen wiederaufladbaren Batteriezelle in einer Querschnittsdarstellung;
- Figur 4:: zeigt ein Detail des zweiten Ausführungsbeispiels aus Figur 3;
- Figur 5:: zeigt ein drittes Ausführungsbeispiel der erfindungsgemäßen wiederaufladbaren Batteriezelle in einer Explosionsdarstellung;
- Figur 6:: zeigt ein drittes Ausführungsbeispiel der erfindungsgemäßen wiederaufladbaren Batteriezelle in einer Explosionsdarstellung;
- Figur 7:: zeigt das Potenzial in [V] einer Testzelle mit einer Drei-Elektrodenanordnung beim Laden und Entladen der negativen Elektroden mit Hartkohlenstoff als aktives Elektrodenmaterialien als Funktion der Kapazität;
- Figur 8:: zeigt das Potenzial in [V] einer Testzelle mit einer Drei-Elektrodenanordnung beim mehrmaligen Laden und Entladen der negativen Elektroden mit metallischem Natrium als aktives Elektrodenmaterial als Funktion der Zeit;
- Figur 9:: zeigt den Potentialverlauf in Volt als Funktion der Kapazität von dem Zyklus 1 und dem Zyklus 2 einer Testzelle mit einer Drei-Elektrodenanordnung mit Natriumcobaltoxid als aktives Material der positiven Elektrode;
- Figur 10:: zeigt die Leitfähigkeit in [mS/cm] des Elektrolyten Na1 und des Referenzelektrolyten in Abhängigkeit von der Konzentration der Leitsalze.

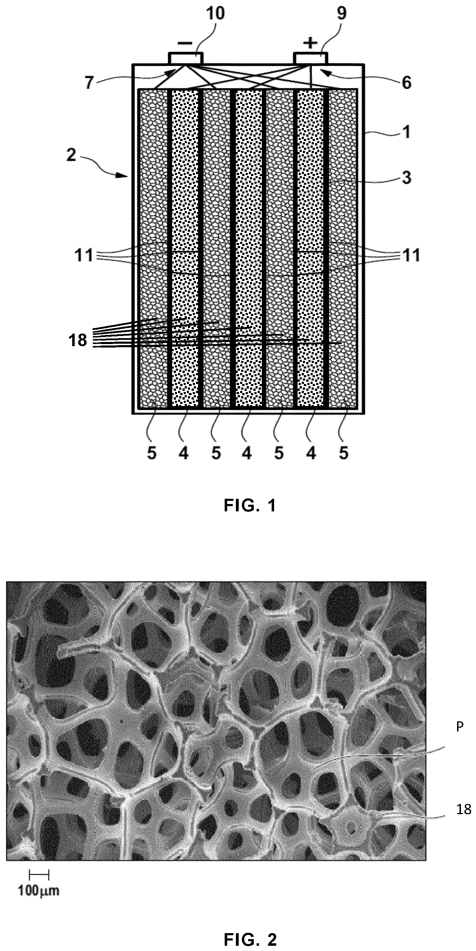

Figur 1 zeigt ein erstes Ausführungsbeispiel einer erfindungsgemäßen wiederaufladbaren Batteriezelle 2 in Querschnittsdarstellung. Diese wiederaufladbare Batteriezelle 2 ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der wiederaufladbaren Batteriezelle 2 verbunden. Die wiederaufladbare Batteriezelle 2 ist derart mit einem auf SO₂-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel enthalten die positiven Elektroden 4 eine Interkalationsverbindung als aktives Material. Bei dieser Interkalationsverbindung handelt es sich um NaCoO₂.

Die Elektroden 4, 5 sind im vorliegenden Ausführungsbeispiel flächig ausgebildet, d.h. als Schichten mit einem im Verhältnis zu ihrer Flächenausdehnung geringeren Dicke. Sie sind jeweils durch Separatoren 11 voneinander getrennt. Das Gehäuse 1 der wiederaufladbaren Batteriezelle 2 ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material (in Figur 1 nicht dargestellt). Das Ableitelement ist in Form eines porösen Metallschaums 18 ausgebildet. Der Metallschaum 18 erstreckt sich über die Dickendimension der Elektroden 4, 5. Das aktive Material der positiven Elektroden 4 und der negativen Elektroden 5 ist in die Poren dieses Metallschaums 18 eingearbeitet, sodass es dessen Poren über die gesamte Dicke der Metallstruktur gleichmäßig füllt. Zur Verbesserung der mechanischen Festigkeit enthalten die positiven Elektroden 4 ein Bindemittel. Bei diesem Bindemittel handelt es sich um ein Fluorpolymer. Die negativen Elektroden 5 enthalten als aktives Material Kohlenstoff in einer als Insertionsmaterial zur Aufnahme von Natriumionen geeigneten Form. Die Struktur der negativen Elektrode 5 ist ähnlich wie bei der positiven Elektrode 4.

Figur 2 zeigt eine elektronenmikroskopische Aufnahme der dreidimensionalen porösen Struktur des Metallschaums 18 des ersten Ausführungsbeispiels aus Figur 1. Anhand des angegebenen Maßstabes ist zu erkennen, dass die Poren P im Mittel einen Durchmesser von mehr als 100 µm haben, also verhältnismäßig groß sind. Bei diesem Metallschaum handelt es sich um einen Metallschaum aus Nickel.

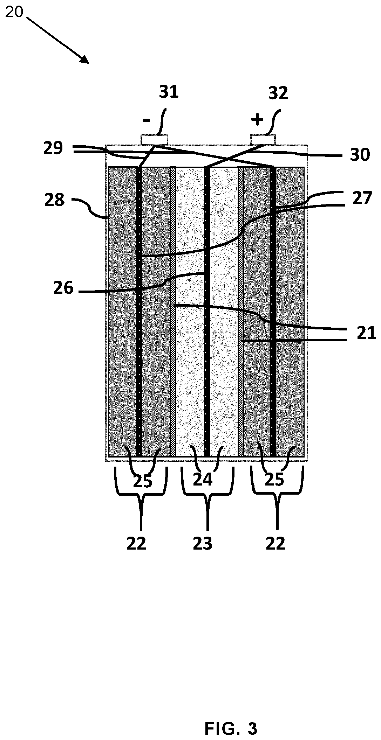

Figur 3 zeigt ein zweites Ausführungsbeispiel einer erfindungsgemäßen wiederaufladbaren Batteriezelle 20 in Querschnittsdarstellung. Dieses zweite Ausführungsbeispiel unterscheidet sich von dem in Figur 1 gezeigten, ersten Ausführungsbeispiel dadurch, dass die Elektrodenanordnung eine positive Elektrode 23 und zwei negative Elektroden 22 umfasst. Sie sind jeweils durch Separatoren 21 voneinander getrennt und von einem Gehäuse 28 umgeben. Die positive Elektrode 23 weist ein Ableitelement 26 in Form einer planaren Metallfolie auf, auf welche das aktive Material 24 der positiven Elektrode 23 beidseitig aufgebracht ist. Die negativen Elektroden 22 umfassen ebenfalls ein Ableitelement 27 in Form einer planaren Metallfolie, auf welche das aktive Material 25 der negativen Elektrode 22 beidseitig aufgebracht ist. Alternativ können die planaren Ableitelemente der Randelektroden, also der Elektroden, die den Elektrodenstapel abschließen, nur einseitig mit aktivem Material beschichtetet sein. Die nicht-beschichtete Seite zeigt zur Wand des Gehäuses 28. Die Elektroden 22, 23 sind über Elektrodenanschlüsse 29, 30 mit entsprechenden Anschlusskontakten 31, 32 der wiederaufladbaren Batteriezelle 20 verbunden.

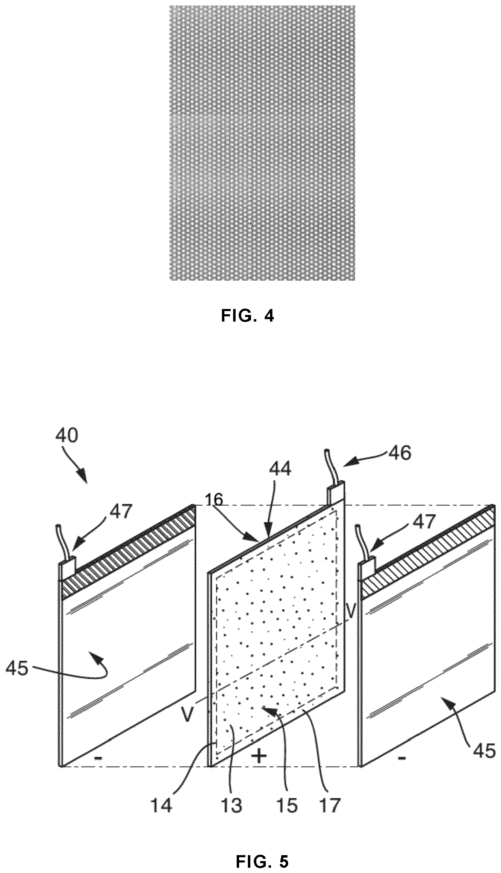

Figur 4 zeigt die planare Metallfolie, welche jeweils als Ableitelement 26, 27 für die positive Elektroden 23 und die negativen Elektroden 22 im zweiten Ausführungsbeispiel aus Figur 3 dient. Diese Metallfolie weist eine durchbrochene bzw. netzartige Struktur mit einer Dicke von 20 µm auf.

Figur 5 zeigt ein drittes Ausführungsbeispiel einer erfindungsgemäßen wiederaufladbaren Batteriezelle 40 in Explosionsdarstellung. Dieses dritte Ausführungsbeispiel unterscheidet sich von den beiden zuvor erläuterten Ausführungsbeispielen dadurch, dass die positive Elektrode 44 von einer Umhüllung 13 umhüllt ist. Dabei ist eine Flächenausdehnung der Umhüllung 13 größer als eine Flächenausdehnung der positiven Elektrode 44, deren Begrenzung 14 in Figur 5 als gestrichelte Linie eingezeichnet ist. Zwei, die positive Elektrode 44 beidseitig bedeckende Schichten 15, 16 der Umhüllung 13 sind am umlaufenden Rand der positiven Elektrode 44 durch eine Randverbindung 17 miteinander verbunden. Die beiden negativen Elektroden 45 sind nicht umhüllt. Die Elektroden 44 und 45 können über die Elektrodenanschlüsse 46 und 47 kontaktiert werden.

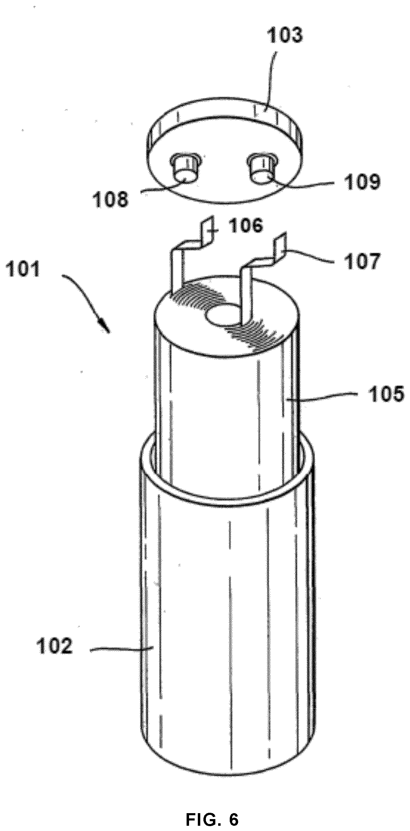

Figur 6 zeigt ein drittes Ausführungsbeispiel einer erfindungsgemäßen wiederaufladbaren Batteriezelle 101 in Explosionsdarstellung. Gezeigt sind die wesentlichen Konstruktionselemente einer Batteriezelle 101 mit einer gewickelten Elektrodenanordnung. In einem zylindrischen Gehäuse 102 mit einem Deckelteil 103 befindet sich eine Elektrodenanordnung 105, die aus einem bahnförmigen Ausgangsmaterial gewickelt ist. Die Bahn besteht aus mehreren Schichten, zu denen eine positive Elektrode, eine negative Elektrode und ein zwischen den Elektroden verlaufender Separator gehört, der die Elektroden elektrisch und mechanisch voneinander isoliert, jedoch ausreichend porös bzw. ionenleitend ist, um den erforderlichen Ionenaustausch zu ermöglichen. Auf diese Weise entstehen große elektrochemisch wirksame Oberflächen, die eine entsprechend hohe Stromausbeute ermöglichen. Die positive Elektrode weist ein Ableitelement in Form einer planaren Metallfolie auf, auf welche eine homogene Mischung aus dem aktiven Material der positiven Elektrode beidseitig aufgebracht ist. Die negative Elektrode umfasst ebenfalls ein Ableitelement in Form einer planaren Metallfolie, auf welche eine homogene Mischung aus dem aktiven Material der negativen Elektrode beidseitig aufgebracht ist.

Der Hohlraum des Gehäuses 102 ist, soweit er nicht von der Elektrodenanordnung 105 eingenommen wird, mit einem nicht dargestellten Elektrolyten gefüllt. Die positive und negative Elektrode der Elektrodenanordnung 105 sind über entsprechende Anschlussfahnen 106 für die positive Elektrode und 107 für die negative Elektrode mit den Anschlusskontakten 108 für die positive Elektrode und 109 für die negative Elektrode verbunden, die den elektrischen Anschluss der wiederaufladbaren Batteriezelle 101 ermöglichen. Alternativ zu dem in Figur 6 gezeigten elektrischen Anschluss der negativen Elektrode mittels der Anschlussfahne 107 und dem Anschlusskontakt 109, kann der elektrische Anschluss der negativen Elektrode auch über das Gehäuse 102 erfolgen.

### Beispiel 1: Herstellung eines Referenzelektrolyten

Für die nachfolgend beschriebenen Experimente wurde ein auf SO₂-basierender Referenzelektrolyt hergestellt. Hierfür wurde zunächst eine unten dargestellte Verbindung Li1 als Leitsalz gemäß einem in dem folgenden Dokument [V5] beschriebenen Herstellungsverfahren hergestellt:
[V5] "I. Krossing, Chem. Eur. J. 2001, 7, 490;

Diese Verbindung 1 stammt aus der Familie der Polyfluoroalkoxyaluminate und wurde gemäß folgender Reaktionsgleichung ausgehend von LiAlH₄ und dem entsprechenden Alkohol R-OH mit R¹=R²=R³=R⁴ in Hexan hergestellt.

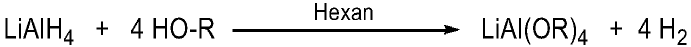

Hierdurch wurde die nachfolgend darstellte Verbindung Li1 mit der folgenden Summen- bzw. Strukturformel gebildet:

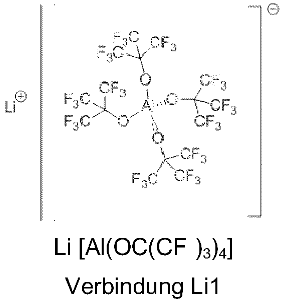

Zur Herstellung des Referenzelektrolyten wurde diese Verbindung Li1 in SO₂ gelöst. Die Konzentration des Leitsalzes im Referenzelektrolyten betrug 0,6 mol/L.

### Beispiel 2: Herstellung eines Ausführungsbeispielen eines auf SO₂ -basierenden Elektrolyten für eine Batteriezelle

Für die nachfolgend beschriebenen Experimente wurde ein Ausführungsbeispiel des auf SO₂-basierenden Elektrolyten hergestellt. Hierfür wurde zunächst die unten dargestellte Verbindung Na1 als Leitsalz nach Formel (I) gemäß einem in dem folgenden Dokument [V6] beschriebenen Herstellungsverfahren hergestellt:
[V6] P. J. Malinowski et al, Dalton Trans., 2020, 49, 7766-7773 Das Leitsalz nach Formel (I) wurde gemäß folgender Reaktionsgleichung ausgehend von NaAlH₄ und dem entsprechenden Alkohol R-OH mit R =R²=R³=R⁴ in Hexan hergestellt.

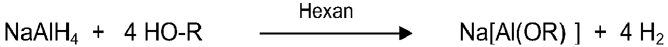

Hierdurch wurden die nachfolgend darstellte Verbindung Na1 mit der Summen- bzw. Strukturformel gebildet:

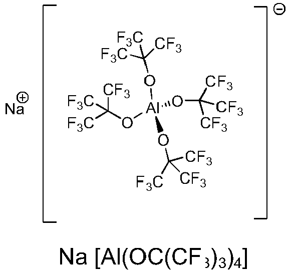

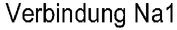

Danach erfolgte die Lösung der Verbindung Na1 in SO₂ bei Tieftemperatur oder unter Druck gemäß den nachfolgend aufgelisteten Verfahrensschritten 1 bis 4:
1) Vorlage der jeweiligen Verbindung Na1 in einem Druckkolben mit Steigrohr,
2) Evakuieren des Druckkolbens,
3) Einströmen von flüssigem SO₂ und
4) Wiederholung der Schritte 2 + 3 bis die Zielmenge an SO₂ zugegeben worden ist.

Dadurch entstand der Elektrolyt Na1. Die Konzentration der Verbindungen Na1 in dem

Elektrolyten betrug 0,6 mol/l (Stoffmengenkonzentration bezogen auf 1 Liter des Elektrolyten), sofern in der Experimentbeschreibung nichts Anderes beschrieben ist. Mit dem Elektrolyten Na1 und dem Referenzelektrolyten wurden die nachfolgend beschriebenen Experimente durchgeführt.

### Experiment 1: Verhalten von negativen Elektroden aus Hartkohlenstoff (engl. hard carbon)

Die Experimente wurden in einer Testzelle mit einer Drei-Elektrodenanordnung (Arbeitselektrode, Gegenelektrode und Bezugselektrode) mit metallischem Natrium als Gegen- und Bezugselektrode durchgeführt. Die Arbeitselektrode war eine Elektrode mit einem Aktivmaterial aus Hartkohlenstoff (engl. hard carbon). Die Zusammensetzung der Elektrode war 96 Gew% Hartkohlenstoff (engl. hard carbon) und insgesamt 4 Gew% der Binder CMC und SBR. Das Ableitelement war eine Folie aus Aluminium. Die Halbzellen wurden mit dem Elektrolyten Na1 befüllt.

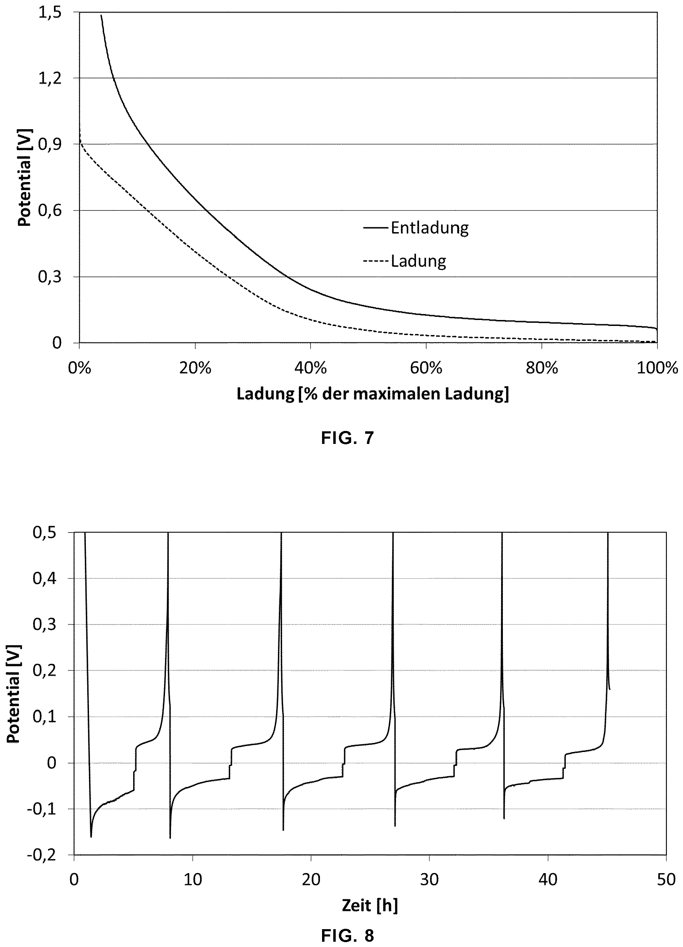

Die Halbzelle wurde mehrmals mit einer Lade-/ Entlade-Rate von 0,1 C bis zu einem Potential von 0,005 Volt geladen und bis zu einem Potential von 1,5 Volt entladen. Figur 7 zeigt die Potentiale der Ladekurve und Entladekurve für den fünften Zyklus der Halbzelle. Die gestrichelte Kurve entspricht den Potentialen der Ladekurve und die durchgezogene Kurve entspricht den Potentialen der Entladekurve.

Die Lade- und Entladekurven zeigen ein batterietypisches Verhalten mit einer guten Zykeleffizienz von über 95%.

### Experiment 2: Verhalten von negativen Elektroden aus metallischem Natrium

Die Experimente wurden in einer Testzelle mit einer Drei-Elektrodenanordnung (Arbeitselektrode, Gegenelektrode und Bezugselektrode) mit metallischem Natrium als Gegen- und Bezugselektrode durchgeführt. Die Arbeitselektrode war eine Folie aus Aluminium. Die Halbzellen wurden mit dem Elektrolyten Na1 befüllt.

Es erfolgte eine wiederholte Abscheidung (Ladung) und Auflösung (Entladung) von metallischem Natrium. Dazu wurden zunächst 0,25 mAh/cm² Natrium abgeschieden. Danach erfolgte die Entladung bis zu einem Potential von 0,5 Volt. Die Lade- bzw. Entladerate betrug jeweils 0,1 mA/cm². Figur 8 zeigt den Potentialverlauf von fünf Lade-/ Entladezyklen über der Zeit.

Die Abscheidung und Auflösung von metallischem Natrium zeigen einen gleichmäßigen Verlauf über die fünf Zyklen.

### Experiment 3: Testzellen mit Natriumcobaltoxid der Zusammensetzung Na_{0.7}CoO₂ als aktives Elektrodenmaterial

Um Natriumcobaltoxid als aktives Elektrodenmaterial für die positive Elektrode in dem Elektrolyten Na1 zu testen, wurde in einem Experiment eine Testzelle mit einer Drei-Elektrodenanordnung (Arbeitselektrode, Gegenelektrode und Bezugselektrode) hergestellt. Das aktive Material der positiven Elektrode (Kathode) bestand aus Natriumcobaltoxid der Zusammensetzung Na_{0.7}CoO₂. Die Zusammensetzung der gesamten positiven Elektrode waren 94 Gew% Na_{0.7}CoO₂ und 4 Gew% des Binder PVDF und 2 Gew% Carbon Black. Das Ableitelement war eine Folie aus Aluminium. Die Gegenelektrode und die Bezugselektrode bestanden aus metallischem Natrium. Die Testzelle wurde mit dem Elektrolyten Na1 befüllt.

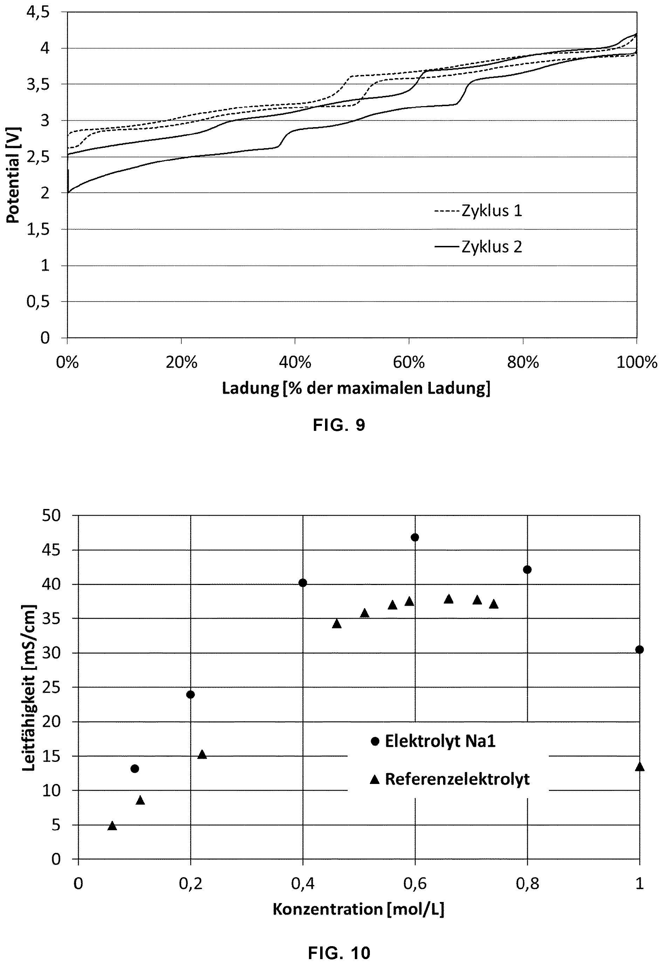

Die Testzelle wurde mit einer Laderate von 0,1 C bis zu einem oberen Potential von 4,2 V geladen. Danach erfolgte die Entladung mit einer Entladerate von 0,1 C bis zu einem Entladepotential von 2,0 Volt. Figur 9 zeigt den Potentialverlauf der ersten beiden Lade-/Entladezyklen in Volt [V] als Funktion der Ladung in % der maximalen Ladung.

Die Potentialkurven zeigen ein stabiles Lade- und Entladeverhalten. Der Kurvenverlauf ist typisch für diese Art von Elektrodenmaterial.

### Experiment 4: Bestimmung der Leitfähigkeit des Elektrolyten Na1 im Vergleich zum Referenzelektrolyten

Zur Bestimmung der Leitfähigkeit wurde der Na1-Elektrolyt mit verschiedenen Konzentrationen der Verbindung Na1 hergestellt. Für jede Konzentration der Verbindung wurde die Leitfähigkeit des Elektrolyten bestimmt, indem ein konduktives Messverfahren verwendet wurde. Dabei wurde nach Temperierung ein Vierelektrodensensor berührend in die Lösung gehalten und in einem Messbereich von 0,02 - 500 mS/cm gemessen.

Die identischen Messungen wurden mit dem Referenzelektrolyten durchgeführt.

Figur 10 zeigt die Leitfähigkeit des Elektrolyten Na1 in Abhängigkeit der Konzentration der Verbindung Na1. Zum Vergleich ist die Leitfähigkeit des Referenzelektrolyten in Abhängigkeit der Konzentration der entsprechenden Li-Verbindung (siehe [V4]) aufgetragen.

Zu sehen ist ein Maximum der Leitfähigkeit bei einer Konzentration der Verbindung Na1 von 0,6 mol/L mit einem hohen Leitfähigkeitswert von ca. 48 mS/cm. Im Vergleich hat der Referenzelektrolyt ein Maximum der Leitfähigkeit bei einer Konzentration der Verbindung Li1 von 0,6 mol/L - 0,7 mol/L von ca. 38 mS/cm.

Der Elektrolyt Na1 mit dem Leitsalz Na1 hat also eine bessere Leitfähigkeit, wie der Referenzelektrolyt mit der entsprechenden Lithiumverbindung Li1. Dies war äußerst überraschend, da zum einen in auf SO₂-basierenden Elektrolyten aus dem Stand der Technik die Lithiumverbindung eine bessere Leitfähigkeit gezeigt hat als die Natriumverbindung, wie oben bereits beschreiben (siehe [V1] US 4,891,281). Zum anderen ist das Natrium-Ion größer als das Lithium-Ion, so dass für Lithium-Elektrolyte auch eine bessere Leitfähigkeit erwartet wird. Die in der Tabelle 1 zusammengefassten Ergebnisse der Experimente zeigen die überraschenden Ergebnisse in Bezug auf die Leitfähigkeiten.

**Tabelle 1: Leitfähigkeiten**

| **Leitsalz** | **Leitfähigkeit [mS/cm]** | **Quelle** |
|---|---|---|
| LiAlCl₄* 3,5 SO₂ | **100** | [V1] |
| NaAlCl₄* 2,8 SO₂ | 80 | [V1] |
| | | |
| Referenzelektrolyt (Leitsalz Li1) | 38 | Maximum Figur 10 |
| Elektrolyt Na1 (Leitsalz Na1) | **47** | Maximum Figur 10 |

Im Vergleich dazu haben die aus dem Stand der Technik bekannten, organischen Elektrolyten, wie z.B. LP30 (1 M LiPF6 / EC-DMC (1:1 Gew.)) eine Leitfähigkeit von nur ca. 10 mS/cm.

## Patentansprüche

1. Wiederaufladbare Batteriezelle (2, 20, 40, 101), enthaltend ein aktives Metall, zumindest eine positive Elektrode (4, 23, 44), zumindest eine negative Elektrode (5, 22, 45), ein Gehäuse (1, 28, 102) und einen Elektrolyten, wobei das aktive Metall Natrium ist,
und wobei der Elektrolyt auf SO₂ basiert und zumindest ein erstes Leitsalz enthält, welches die Formel (I) 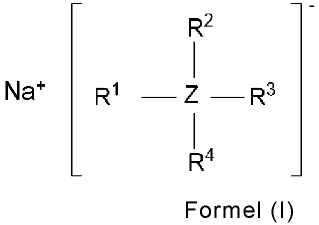
aufweist, wobei
- die Substituenten R¹, R² und R³ unabhängig voneinander ausgewählt sind aus der Gruppe bestehend aus einem Halogenatom, einer Hydroxygruppe und einer chemischen Gruppe -OR⁵; der Substituent R⁴ ausgewählt ist aus der Gruppe bestehend aus einer Hydroxygruppe und einer chemischen Gruppe -OR⁵;
- der Substituent R⁵ ausgewählt ist aus der Gruppe bestehend aus C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl, wobei die aliphatischen, cyclischen, aromatischen und heteroaromatischen Gruppen unsubstituiert oder substituiert sein können;
- Z Aluminium oder Bor ist;
- mindestens zwei der Substituenten R¹, R², R³ und R⁴ gemeinsam einen Chelatliganden bilden können, der an Z koordiniert ist; und
- die aliphatischen, cyclischen, aromatischen und heteroaromatischen Gruppen des Substituenten R⁵ weiter substituiert werden können mit einem oder mehreren Halogenatomen, insbesondere Fluor, oder einer chemischen Gruppe, die ausgewählt ist aus der Gruppe bestehend aus C₁-C₄-Alkyl, C₂-C₄-Alkenyl, C₂-C₄-Alkinyl, Phenyl, Benzyl, und vollständig oder teilweise halogeniertem, insbesondere vollständig oder teilweise fluoriertem C₁-C₄-Alkyl, C₂-C₄-Alkenyl, C₂-C₄-Alkinyl, Phenyl und Benzyl.

2. Wiederaufladbare Batteriezelle (2, 20, 40, 101) nach Anspruch 1, wobei das aktive Metall Natrium in der negativen Elektrode gespeichert ist als:
- metallisches Natrium; und / oder
- in mindestens einem natriumspeichernden Material, das ausgewählt ist aus der Gruppe bestehend aus Insertionsmaterialien, Adsorptionsmaterialien, legierungsbildenden Materialien und Konversionsmaterialien.

3. Wiederaufladbare Batteriezelle (2, 20, 40, 101) nach Anspruch 2,
bei welcher das natriumspeichernde Material ein Insertionsmaterial enthaltend Kohlenstoff ist, das ausgewählt ist aus der Gruppe bestehend aus Hartkohlenstoff (engl. hard carbon), Weichkohlenstoff (engl. soft carbon), Graphen und heteroatom-gedopten Kohlenstoffen.

4. Wiederaufladbare Batteriezelle (2, 20, 40, 101) nach Anspruch 2,
bei welcher das natriumspeichernde Material ein kohlenstofffreies Insertionsmaterial ist, vorzugsweise ein Natrium-Titanat, insbesondere Na₂Ti₃O₇ oder NaTi₂(PO₄)₃.

5. Wiederaufladbare Batteriezelle (2, 20, 40, 101) nach Anspruch 2,
bei welcher das natriumspeichernde Material ein Natriumlegierungsbildendes Material ist, welches ausgewählt ist aus der Gruppe bestehend aus:
- natriumspeichernden Metallen und Metalllegierungen vorzugsweise Sn, Sb, oder
- Sulfiden und Oxiden der natriumspeichernden Metalle und Metalllegierungen vorzugsweise SnSₓ, SbSₓ, oxidische Gläser von Sn, Sb.

6. Wiederaufladbare Batteriezelle (2, 20, 40, 101) nach Anspruch 2,
bei welcher das natriumspeichernde Material ein Konversionsmaterial ist, welches ausgewählt ist aus der Gruppe bestehend aus Sulfiden, Oxiden, Seleniden und Fluoriden der Metalle Ti, V, Cr, Mn, Fe, Co, Ni, Cu und Zn, vorzugsweise Eisensulfiden (FeSₓ), Eisenseleniden (FeSeₓ), Eisenfluoriden (FeFₓ), Eisenoxiden (FeOₓ), Cobaltoxiden (CoOₓ), Nickeloxiden (NiOₓ) und Kupferoxiden (CuOₓ).

7. Wiederaufladbare Batteriezelle (2, 20, 40, 101) nach Anspruch 2,
bei welcher die negative Elektrode (5, 22, 45) zumindest ein Natrium legierungsbildendes Anodenmaterial in Kombination mit zumindest einem Insertionsmaterial enthaltend Kohlenstoff aufweist.

8. Wiederaufladbare Batteriezelle (2, 20, 40, 101) nach einem der vorhergehenden Ansprüche,
bei welcher die positive Elektrode (4, 23, 44) als aktives Material zumindest eine Verbindung enthält, die vorzugsweise die Zusammensetzung NaₓM'_{y}M"_{z}Oₐ aufweist, worin
- M' mindestens ein Metall ist, das ausgewählt ist aus der Gruppe bestehend aus den Elementen Ti, V, Cr, Mn, Fe, Co, Ni, Cu und Zn;
- M" mindestens ein Element ist, das ausgewählt ist aus der Gruppe bestehend aus den Elementen der Gruppen 2, 3, 4, 5, 6, 7, 8, 9, 10, 11, 12, 13, 14, 15 und 16 des Periodensystems der Elemente;
- x und y unabhängig voneinander Zahlen größer 0 sind;
- z eine Zahl größer oder gleich 0 ist; und
- a eine Zahl größer 0 ist.

9. Wiederaufladbare Batteriezelle (2, 20, 40, 101) nach einem der vorhergehenden Ansprüche,
bei welcher die positive Elektrode (4, 23, 44) mindestens bis zu einem oberen Potential von 3,6 Volt, weiter bevorzugt mindestens bis zu einem oberen Potential von 3,8 Volt, weiter bevorzugt mindestens bis zu einem oberen Potential von 4,0 Volt, weiter bevorzugt mindestens bis zu einem oberen Potential von 4,2 Volt und besonders bevorzugt mindestens bis zu einem oberen Potential von 4,4 Volt in der wiederaufladbaren Batteriezelle ladbar ist.

10. Wiederaufladbare Batteriezelle (2, 20, 40, 101) nach einem der vorhergehenden Ansprüche,
bei welcher die Substituenten R¹, R², R³ und R⁴ des ersten Leitsalzes unabhängig voneinander die Struktur der chemischen Gruppe -OR⁵ aufweisen, wobei R⁵ ausgewählt ist aus der Gruppe bestehend aus C₁-C₁₀ Alkyl, C₂-C₁₀ Alkenyl, C₂-C₁₀ Alkinyl, C₃-C₁₀ Cycloalkyl, C₆-C₁₄ Aryl und C₅₋C₁₄ Heteroaryl, wobei die aliphatischen, cyclischen, aromatischen und heteroaromatischen Gruppen unsubstituiert oder substituiert sein können.

11. Wiederaufladbare Batteriezelle (2, 20, 40, 101) nach einem der vorhergehenden Ansprüche,
bei welcher der Substituent R⁵ ausgewählt ist aus der Gruppe bestehend aus
- C₁-C₆ Alkyl, bevorzugt C₂-C₄ Alkyl, besonders bevorzugt 2-Propyl, Methyl und Ethyl;
- C₂-C₆ Alkenyl, bevorzugt C₂-C₄ Alkenyl, besonders bevorzugt Ethenyl und Propenyl;
- C₂-C₆-Alkinyl, bevorzugt C₂-C₄-Alkinyl;
- C₃-C₆ Cycloalkyl;
- Phenyl; und
- C₅-C₇ Heteroaryl;
- wobei die aliphatischen, cyclischen, aromatischen und heteroaromatischen Gruppen unsubstituiert oder substituiert sein können.

12. Wiederaufladbare Batteriezelle (2, 20, 40, 101) nach einem der Ansprüche 10 bis 11,
bei welcher der Substituent R⁵ zumindest mit einer CF₃-Gruppe oder einer OSO₂CF₃-Gruppe substituiert ist.

13. Wiederaufladbare Batteriezelle (2, 20, 40, 101) nach einem der vorhergehenden Ansprüche,
bei welcher der Chelatligand zweizähnig, insbesondere gemäß der Formel - O-R⁵-O, oder mehrzähnig ausgebildet ist.

14. Wiederaufladbare Batteriezelle (2, 20, 40, 101) nach einem der vorhergehenden Ansprüche,
bei welcher das erste Leitsalz ausgewählt ist aus der Gruppe bestehend aus

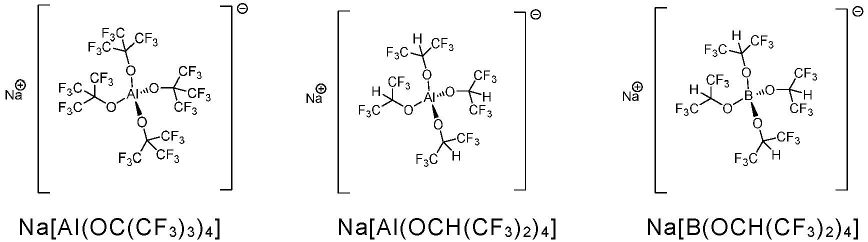

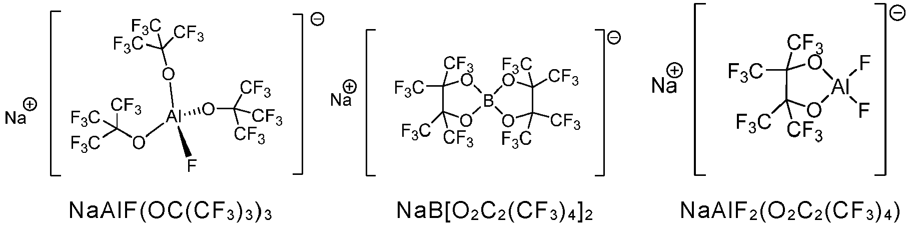

15. Wiederaufladbare Batteriezelle (2, 20, 40, 101) nach einem der vorhergehenden Ansprüche,
bei welcher der Elektrolyt die Zusammensetzung
5 bis 99,4 Gew.-% Schwefeldioxid,
0,6 bis 95 Gew.-% des ersten Leitsalzes,
0 bis 25 Gew.-% des zweiten Leitsalzes und
0 bis 10 Gew.-% eines Additivs,
bezogen auf das Gesamtgewicht der Elektrolytzusammensetzung aufweist.

16. Wiederaufladbare Batteriezelle (2, 20, 40, 101) nach einem der vorhergehenden Ansprüche,
bei welcher die Stoffmengenkonzentration des ersten Leitsalzes im Bereich von 0,01 mol/l bis 10 mol/l, bevorzugt von 0,05 mol/l bis 10 mol/l, weiter bevorzugt von 0,1 mol/l bis 6 mol/l und besonders bevorzugt von 0,2 mol/l bis 3,5 mol/l bezogen auf das Gesamtvolumen des Elektrolyten ist.

17. Wiederaufladbare Batteriezelle (2, 20, 40, 101) nach einem der vorhergehenden Ansprüche,
bei welcher der Elektrolyt mindestens 0,1 Mol SO₂, bevorzugt mindestens 1 Mol SO₂, weiter bevorzugt mindestens 5 Mol SO₂, weiter bevorzugt mindestens 10 Mol SO₂ und besonders bevorzugt mindestens 20 Mol SO₂ je Mol Leitsalz enthält.

18. Wiederaufladbare Batteriezelle (2, 20, 40, 101) nach einem der vorhergehenden Ansprüche,
bei welcher die Gesamtheit an organischen Lösungsmitteln im Elektrolyten höchstens 50 Gew% bevorzugt höchstens 40 Gew%, weiter bevorzugt höchstens 30 Gew%, weiter bevorzugt höchstens 20 Gew%, weiter bevorzugt höchstens 15 Gew%, weiter bevorzugt höchstens 10 Gew%, weiter bevorzugt höchstens 5 Gew% weiter bevorzugt höchstens 1 Gew% und besonders bevorzugt der Elektrolyt von organischen Lösungsmittel frei ist.

19. Wiederaufladbare Batteriezelle (2, 20, 40, 101) nach einem der vorhergehenden Ansprüche,
bei welcher das Ableitelement der negativen Elektrode (5, 22, 45) aus Nickel, Kupfer oder Aluminium ausgebildet ist.

## Claims

1. Rechargeable battery cell (2, 20, 40, 101) containing an active metal, at least one positive electrode (4, 23, 44), at least one negative electrode (5, 22, 45), a housing (1, 28, 102) and an electrolyte, wherein the active metal is sodium,
and wherein the electrolyte is based on SO₂ and contains at least a first conducting salt which has the formula (I), 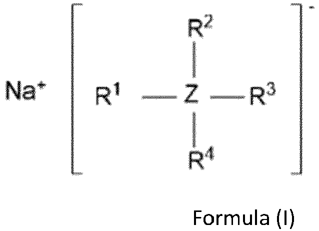
wherein
- the substituents R¹, R² and R³ are independently selected from the group consisting of a halogen atom, a hydroxy group and a chemical group -OR⁵; the substituent R⁴ is selected from the group consisting of a hydroxy group and a chemical group -OR⁵;
- the substituent R⁵ is selected from the group consisting of C₁-C₁₀ alkyl, C₂-C₁₀ alkenyl, C₂-C₁₀ alkynyl, C₃-C₁₀ cycloalkyl, C₆-C₁₄ aryl and C₅₋C₁₄ heteroaryl, wherein the aliphatic, cyclic, aromatic and heteroaromatic groups may be unsubstituted or substituted;
- Z is aluminium or boron;
- at least two of the substituents R¹, R², R³ and R⁴ may together form a chelating ligand which is coordinated to Z; and
- the aliphatic, cyclic, aromatic and heteroaromatic groups of the substituent R⁵ can be further substituted with one or more halogen atoms, in particular fluorine, or a chemical group selected from the group consisting of C₁-C₄ alkyl, C₂-C₄ alkenyl, C₂-C₄ alkynyl, phenyl, benzyl, and fully or partially halogenated, in particular fully or partially fluorinated C₁-C₄ alkyl, C₂-C₄ alkenyl, C₂-C₄ alkynyl, phenyl and benzyl.

2. Rechargeable battery cell (2, 20, 40, 101) according to claim 1, wherein the active metal sodium is stored in the negative electrode as:
- metallic sodium; and/or
- in at least one sodium-storing material selected from the group consisting of insertion materials, adsorption materials, alloy-forming materials and conversion materials.

3. Rechargeable battery cell (2, 20, 40, 101) according to claim 2, in which the sodium-storing material is an insertion material containing carbon selected from the group consisting of hard carbon, soft carbon, graphene and heteroatom-doped carbons.

4. Rechargeable battery cell (2, 20, 40, 101) according to claim 2, in which the sodium-storing material is a carbon-free insertion material, preferably a sodium titanate, in particular Na₂Ti₃O₇ or NaTi₂(PO₄)₃.

5. Rechargeable battery cell (2, 20, 40, 101) according to claim 2, in which the sodium-storing material is a sodium alloy-forming material selected from the group consisting of:
- sodium-storing metals and metal alloys, preferably Sn, Sb, or
- sulphides and oxides of the sodium-storing metals and metal alloys, preferably SnSₓ, SbSₓ, oxide glasses of Sn, Sb.

6. Rechargeable battery cell (2, 20, 40, 101) according to claim 2, in which the sodium-storing material is a conversion material selected from the group consisting of sulphides, oxides, selenides and fluorides of the metals Ti, V, Cr, Mn, Fe, Co, Ni, Cu and Zn, preferably iron sulphides (FeSₓ), iron selenides (FeSeₓ), iron fluorides (FeFₓ), iron oxides (FeOₓ), cobalt oxides (CoOₓ), nickel oxides (NiOₓ)and copper oxides (CuOₓ).

7. Rechargeable battery cell (2, 20, 40, 101) according to claim 2, in which the negative electrode (5, 22, 45) has at least one sodium alloy-forming anode material in combination with at least one insertion material containing carbon.

8. Rechargeable battery cell (2, 20, 40, 101) according to any one of the preceding claims,
in which the positive electrode (4, 23, 44) contains as active material at least one compound which preferably has the composition NaₓM'_{y}M"_{z}Oₐ, wherein
- M' is at least one metal selected from the group consisting of the elements Ti, V, Cr, Mn, Fe, Co, Ni, Cu and Zn;
- M" is at least one element selected from the group consisting of the elements of groups 2, 3, 4, 5, 6, 7, 8, 9, 10, 11, 12, 13, 14, 15 and 16 of the periodic table of elements;
- x and y are independently numbers greater than 0;
- z is a number greater than or equal to 0; and
- a is a number greater than 0.

9. Rechargeable battery cell (2, 20, 40, 101) according to any one of the preceding claims,
in which the positive electrode (4, 23, 44) can be charged in the rechargeable battery cell at least up to an upper potential of 3.6 volts, more preferably at least up to an upper potential of 3.8 volts, more preferably at least up to an upper potential of 4.0 volts, more preferably at least up to an upper potential of 4.2 volts and most preferably at least up to an upper potential of 4.4 volts.

10. Rechargeable battery cell (2, 20, 40, 101) according to any one of the preceding claims,
in which the substituents R¹, R², R³ and R⁴ of the first conducting salt independently of one another have the structure of the chemical group -OR⁵, wherein R⁵ is selected from the group consisting of C₁-C₁₀ alkyl, C₂-C₁₀ alkenyl, C₂-C₁₀ alkynyl, C₃-C₁₀ cycloalkyl, C₆-C₁₄ aryl and C₅₋C₁₄ heteroaryl, wherein the aliphatic, cyclic, aromatic and heteroaromatic groups may be unsubstituted or substituted.

11. Rechargeable battery cell (2, 20, 40, 101) according to any one of the preceding claims,
in which the substituent R⁵ is selected from the group consisting of
- C₁-C₆ alkyl, preferably C₂-C₄ alkyl, most preferably 2-propyl, methyl and ethyl;
- C₂-C₆ alkenyl, preferably C₂-C₄ alkenyl, most preferably ethenyl and propenyl;
- C₂-C₆ alkynyl, preferably C₂-C₄ alkynyl;
- C₃-C₆ cycloalkyl;
- phenyl; and
- C₅-C₇ heteroaryl;
- wherein the aliphatic, cyclic, aromatic and heteroaromatic groups may be unsubstituted or substituted.

12. Rechargeable battery cell (2, 20, 40, 101) according to any one of claims 10 to 11,
in which the substituent R⁵ is substituted with at least one CF₃ group or one OSO₂CF₃ group.

13. Rechargeable battery cell (2, 20, 40, 101) according to any one of the preceding claims,
in which the chelating ligand is bidentate, in particular according to the formula -OR⁵-O, or multidentate.

14. Rechargeable battery cell (2, 20, 40, 101) according to any one of the preceding claims,
in which the first conducting salt is selected from the group consisting of

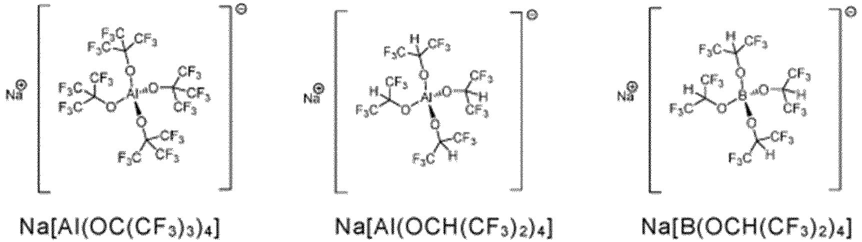

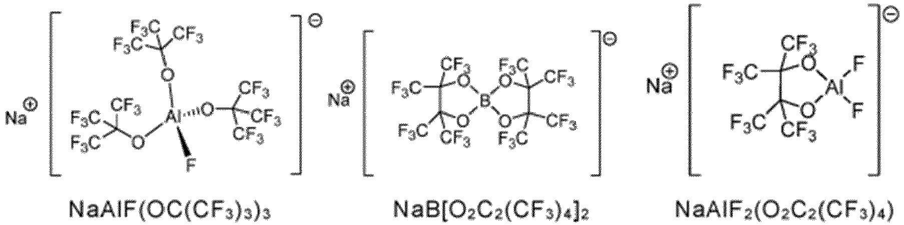

15. Rechargeable battery cell (2, 20, 40, 101) according to any one of the preceding claims,
in which the electrolyte has the composition
5 to 99.4 wt.-% sulfur dioxide,
0.6 to 95 wt.-% of the first conducting salt,
0 to 25 wt.-% of the second conducting salt and
0 to 10 wt.-% of an additive,
based on the total weight of the electrolyte composition.

16. Rechargeable battery cell (2, 20, 40, 101) according to any one of the preceding claims,
in which the material concentration of the first conducting salt is in the range from 0.01 mol/l to 10 mol/l, preferably from 0.05 mol/l to 10 mol/l, more preferably from 0.1 mol/l to 6 mol/l and most preferably from 0.2 mol/l to 3.5 mol/l based on the total volume of the electrolyte.

17. Rechargeable battery cell (2, 20, 40, 101) according to any one of the preceding claims,
in which the electrolyte contains at least 0.1 mol SO₂, preferably at least 1 mol SO₂, more preferably at least 5 mol SO₂, more preferably at least 10 mol SO₂ and most preferably at least 20 mol SO₂ per mol of conducting salt.

18. Rechargeable battery cell (2, 20, 40, 101) according to any one of the preceding claims,
in which the total amount of organic solvents in the electrolyte is at most 50 wt.-%, preferably at most 40 wt.-%, more preferably at most 30 wt.-%, more preferably at most 20 wt.-%, more preferably at most 15 wt.-%, more preferably at most 10 wt.-%, more preferably at most 5 wt.-%, more preferably at most 1 wt.-%, and most preferably the electrolyte is free of organic solvents.

19. Rechargeable battery cell (2, 20, 40, 101) according to any one of the preceding claims,
in which the discharge element of the negative electrode (5, 22, 45) is formed from nickel, copper or aluminium.

## Revendications

1. Cellule de batterie rechargeable (2, 20, 40, 101) contenant un métal actif, au moins une électrode positive (4, 23, 44), au moins une électrode négative (5, 22, 45), un boîtier (1, 28, 102) et un électrolyte, dans laquelle le métal actif est du sodium,
et dans laquelle l'électrolyte est à base de SO₂ et contient au moins un premier sel conducteur qui présente la formule (I), 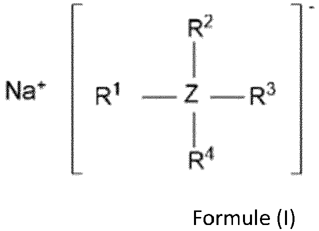
dans laquelle
- les substituants R¹, R² et R³ sont sélectionnés indépendamment les uns des autres parmi le groupe consistant en un atome d'halogène, un groupe hydroxy et un groupe chimique -OR⁵ ; le substituant R⁴ est sélectionné parmi le groupe consistant en un groupe hydroxy et un groupe chimique -OR⁵ ;
- le substituant R⁵ est sélectionné parmi le groupe consistant en alkyle en C₁-C₁₀, alcényle en C₂-C₁₀, alcynyle en C₂-C₁₀, cycloalkyle en C₃-C₁₀, aryle en C₆-C₁₄ et hétéroaryle en C₅-C₁₄, dans laquelle les groupes aliphatiques, cycliques, aromatiques et hétéroaromatiques peuvent être non substitués ou substitués ;
- Z est de l'aluminium ou du bore ;
- au moins deux des substituants R¹, R², R³ et R⁴ peuvent former ensemble un ligand chélate qui est coordonné à Z ; et
- les groupes aliphatiques, cycliques, aromatiques et hétéroaromatiques du substituant R⁵ peuvent en outre être substitués par un ou plusieurs atomes d'halogène, en particulier du fluor, ou par un groupe chimique qui est sélectionné parmi le groupe consistant en alkyle en C₁-C₄, alcényle en C₂-C₄, alcynyle en C₂-C₄, phényle, benzyle et alkyle en C₁-C₄, alcényle en C₂-C₄, alcynyle en C₂-C₄, phényle et benzyle entièrement ou partiellement halogénés, en particulier entièrement ou partiellement fluorés.

2. Cellule de batterie rechargeable (2, 20, 40, 101) selon la revendication 1, dans laquelle le métal actif sodium est stocké dans l'électrode négative en tant que :
- sodium métallique; et/ou
- dans au moins un matériau de stockage de sodium qui est sélectionné parmi le groupe consistant en des matériaux d'insertion, des matériaux d'adsorption, des matériaux formant des alliages et des matériaux de conversion.

3. Cellule de batterie rechargeable (2, 20, 40, 101) selon la revendication 2, dans laquelle le matériau de stockage de sodium est un matériau d'insertion contenant du carbone qui est sélectionné parmi le groupe consistant en du carbone dur (en anglais hard carbon), du carbone mou (en anglais soft carbon), du graphène et du carbone dopé par des hétéroatomes.

4. Cellule de batterie rechargeable (2, 20, 40, 101) selon la revendication 2, dans laquelle le matériau de stockage de sodium est un matériau d'insertion sans carbone, de préférence un titanate de sodium, en particulier Na₂Ti₃O₇ ou NaTi₂(PO₄)₃.

5. Cellule de batterie rechargeable (2, 20, 40, 101) selon la revendication 2, dans laquelle le matériau de stockage de sodium est un matériau formant un alliage de sodium qui est sélectionné parmi le groupe consistant en :
- des métaux et alliages métalliques de stockage de sodium, de préférence Sn, Sb, ou
- des sulfures et oxydes des métaux et alliages métalliques de stockage de sodium, de préférence SnSₓ, SbSₓ, des verres d'oxyde de Sn, Sb.

6. Cellule de batterie rechargeable (2, 20, 40, 101) selon la revendication 2, dans laquelle le matériau de stockage du sodium est un matériau de conversion qui est sélectionné parmi le groupe consistant en des sulfures, des oxydes, des séléniures et des fluorures des métaux Ti, V, Cr, Mn, Fe, Co, Ni, Cu et Zn, de préférence des sulfures de fer (FeSₓ), des séléniures de fer (FeSeₓ), des fluorures de fer (FeFₓ), des oxydes de fer (FeOₓ), des oxydes de cobalt (CoOₓ), des oxydes de nickel (NiOₓ) et des oxydes de cuivre (CuOₓ).

7. Cellule de batterie rechargeable (2, 20, 40, 101) selon la revendication 2, dans laquelle l'électrode négative (5, 22, 45) présente au moins un matériau d'anode formant un alliage de sodium en combinaison avec au moins un matériau d'insertion contenant du carbone.

8. Cellule de batterie rechargeable (2, 20, 40, 101) selon l'une quelconque des revendications précédentes,
dans laquelle l'électrode positive (4, 23, 44) contient en tant que matériau actif au moins un composé qui présente de préférence la composition NaₓM'_{y}M"_{z}Oₐ, dans laquelle
- M' est au moins un métal qui est sélectionné parmi le groupe consistant en les éléments Ti, V, Cr, Mn, Fe, Co, Ni, Cu et Zn ;
- M" est au moins un élément qui est sélectionné parmi le groupe consistant en les éléments des groupes 2, 3, 4, 5, 6, 7, 8, 9, 10, 11, 12, 13, 14, 15 et 16 du tableau périodique des éléments ;
- x et y sont indépendamment les uns des autres des nombres supérieurs à 0 ;
- z est un nombre supérieur ou égal à 0 ; et
- a est un nombre supérieur à 0.

9. Cellule de batterie rechargeable (2, 20, 40, 101) selon l'une quelconque des revendications précédentes,
dans laquelle l'électrode positive (4, 23, 44) peut être chargée au moins jusqu'à un potentiel supérieur de 3,6 volts, de préférence en outre au moins jusqu'à un potentiel supérieur de 3,8 volts, de préférence en outre au moins jusqu'à un potentiel supérieur de 4,0 volts, de préférence en outre au moins jusqu'à un potentiel supérieur de 4,2 volts et le plus préférentiellement au moins jusqu'à un potentiel supérieur de 4,4 volts dans la cellule de batterie rechargeable.

10. Cellule de batterie rechargeable (2, 20, 40, 101) selon l'une quelconque des revendications précédentes,
dans laquelle les substituants R¹, R², R³ et R⁴ du premier sel conducteur présentent indépendamment les uns des autres la structure du groupe chimique -OR⁵ dans laquelle R⁵ est sélectionné dans le groupe consistant en alkyle en C₁-C₁₀, alcényle en C₂-C₁₀, alcynyle en C₂-C₁₀, cycloalkyle en C₃-C₁₀, aryle en C₆-C₁₄ et hétéroaryle en C₅-C₁₄, dans laquelle les groupes aliphatiques, cycliques, aromatiques et hétéroaromatiques peuvent être non substitués ou substitués.

11. Cellule de batterie rechargeable (2, 20, 40, 101) selon l'une quelconque des revendications précédentes,
dans laquelle le substituant R⁵ est sélectionné parmi le groupe consistant en
- alkyle en C₁-C₆, de préférence alkyle en C₂-C₄, le plus préférentiellement 2-propyle, méthyle et éthyle ;
- alcényle en C₂-C₆, de préférence alcényle en C₂-C₄, le plus préférentiellement éthényle et propényle ;
- alcynyle en C₂-C₆, de préférence alcynyle en C₂-C₄ ;
- cycloalkyle en C₃-C₆ ;
- phényle ; et
- hétéroaryle en C₅-C₇ ;
- dans laquelle les groupes aliphatiques, cycliques, aromatiques et hétéroaromatiques peuvent être non substitués ou substitués.

12. Cellule de batterie rechargeable (2, 20, 40, 101) selon l'une quelconque des revendications 10 à 11,
dans laquelle le substituant R⁵ est au moins substitué par un groupe CF₃ ou un groupe OSO₂CF₃.

13. Cellule de batterie rechargeable (2, 20, 40, 101) selon l'une quelconque des revendications précédentes,
dans laquelle le ligand chélate est bidenté, en particulier selon la formule - O-R⁵-O, ou polydenté.

14. Cellule de batterie rechargeable (2, 20, 40, 101) selon l'une quelconque des revendications précédentes,
dans laquelle le premier sel conducteur est sélectionné parmi le groupe consistant en

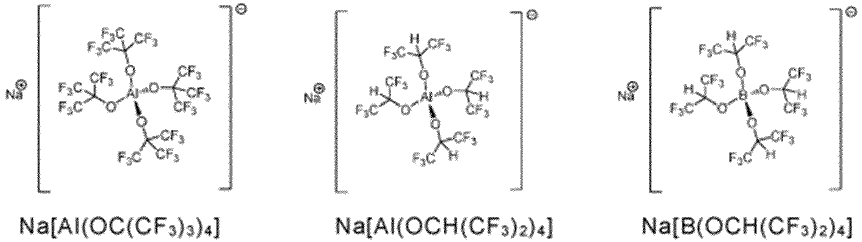

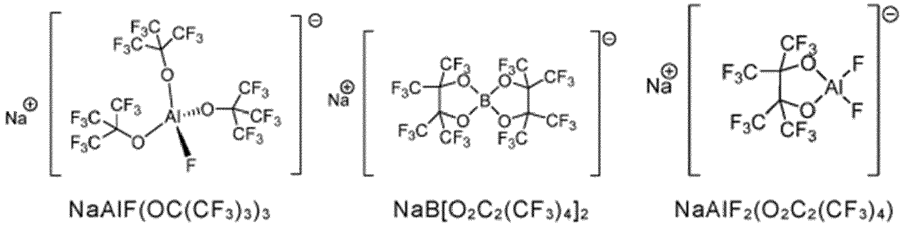

15. Cellule de batterie rechargeable (2, 20, 40, 101) selon l'une quelconque des revendications précédentes,
dans laquelle l'électrolyte présente la composition de
5 à 99,4 % en poids de dioxyde de soufre,
0,6 à 95 % en poids du premier sel conducteur,
0 à 25 % en poids du second sel conducteur et
0 à 10 % en poids d'un additif,
par rapport au poids total de la composition d'électrolyte.

16. Cellule de batterie rechargeable (2, 20, 40, 101) selon l'une quelconque des revendications précédentes,
dans laquelle la concentration molaire du premier sel conducteur est dans la plage de 0,01 mol/l à 10 mol/l, de préférence de 0,05 mol/l à 10 mol/l, plus préférentiellement de 0,1 mol/l à 6 mol/l et le plus préférentiellement de 0,2 mol/l à 3,5 mol/l par rapport au volume total de l'électrolyte.

17. Cellule de batterie rechargeable (2, 20, 40, 101) selon l'une quelconque des revendications précédentes,
dans laquelle l'électrolyte contient au moins 0,1 mole de SO₂, de préférence au moins 1 mole de SO₂, plus préférentiellement au moins 5 moles de SO₂, plus préférentiellement au moins 10 moles de SO₂ et le plus préférentiellement au moins 20 moles de SO₂ par mole de sel conducteur.

18. Cellule de batterie rechargeable (2, 20, 40, 101) selon l'une quelconque des revendications précédentes,
dans laquelle le total des solvants organiques dans l'électrolyte est au plus de 50 % en poids, de préférence au plus de 40 % en poids, plus préférentiellement au plus de 30 % en poids, plus préférentiellement au plus de 20 % en poids, plus préférentiellement au plus de 15 % en poids, plus préférentiellement au plus de 10 % en poids, plus préférentiellement au plus de 5 % en poids, plus préférablement au plus de 1 % en poids et le plus préférentiellement l'électrolyte est exempt de solvants organiques.

19. Cellule de batterie rechargeable (2, 20, 40, 101) selon l'une quelconque des revendications précédentes,
dans laquelle l'élément de dérivation de l'électrode négative (5, 22, 45) est en nickel, en cuivre ou en aluminium.
